# EUROPEAN PATENT APPLICATION

(11) **EP 1 635 195 A1**
(43) Date of publication of application: **15.03.2006**
(21) Application number: 04746163.7
(22) Date of filing: 15.06.2004
(51) Int. Cl.: G02B 1/02

(54) **PROCESS FOR PRODUCING PHOTONIC CRYSTAL AND PHOTONIC CRYSTAL**

(30) Priority: 19.06.2003 JP 2003175147; 31.07.2003 JP 2003204950; 06.08.2003 JP 2003288110
(71) Applicant: TDK Corporation, Chuo-ku, Tokyo 103-8272 (JP)
(72) Inventor: ENOKIDO, Yasushi, Chuo-ku, Tokyo 1038272 (JP)
(74) Representative: HOFFMANN EITLE
(86) International application number: PCT/JP2004/008693
(87) International publication number: WO 2004/113965

(57) **Abstract**

A predetermined pattern of holes h penetrating along the thickness direction are formed in green sheets 11 containing a first dielectric. Successively, by laminating the green sheets 11 having a predetermined pattern of holes h formed therein, a dielectric block 13 having a predetermined pattern of openings arrayed periodically is obtained. In the openings of the dielectric block 13, a second dielectric is arrayed. Consequently, without necessitating particularly complicated steps, it is made possible to obtain a photonic crystal in which the first dielectric and the second dielectric different in relative dielectric constant from the first dielectric are periodically arrayed. By using a dielectric ceramic for each of the first and second dielectrics, a compact and high-performance photonic crystal can be obtained. Alternatively, the first and second dielectrics may be a dielectric ceramic and air, respectively.

## Description

### Technical Field

The present invention relates to a method for producing a photonic crystal and the photonic crystal.

### Background Art

In these years, photonic crystals having a periodic variation of dielectric constant have got a lot of attention. Photonic crystals in which the photonic band gap (hereinafter, simply referred to as "band gap") is developed can be used as elements to control light and electromagnetic wave. For example, by providing defects in a photonic crystal to form an optical waveguide, the photonic crystal can be used as a transmission line (for example, see Japanese Patent Laid-Open Nos. 2001-237616 and 2001-237617).

Photonic crystals can be roughly classified into two types: the periodic structure of dielectric constant is two-dimensional in one type (hereinafter referred to as "two-dimensional periodic structure") and three-dimensional in the other type (hereinafter referred to as "three-dimensional periodic structure").

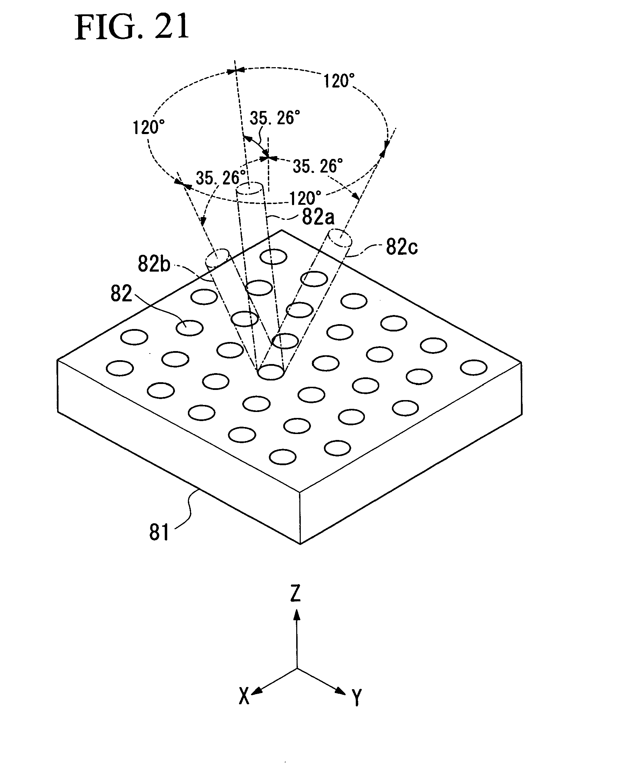

The photonic crystal fabricated for the first time is "Yablonovite" having a three-dimensional periodic structure shown in FIG. 21 (See E. Yablonovitch, T. J. Gmitter and K. M. Leung: Phys. Rev. Lett. , 67, 2295 (1991)). As FIG. 21 shows, Yablonovite is fabricated by covering a dielectric block 81 with a triangular array of openings 82 with predetermined intervals therebetween, and then perforating three holes from each opening 82 at an angle of 35.26° from the normal and spread out 120° on azimuth. In FIG. 21, reference characters 82a to 82c indicate the hole-perforating directions.

Since the advent of Yablonovite, various photonic crystals have been proposed irrespective of the two-dimensional and three-dimensional periodic structures. Such photonic crystals are fabricated by use of micromachining, wafer bonding,semiconductor micro-fabrication,self-cloning, polymerization reaction based on two-photon absorption, photomolding, dry etching and the like (hereinafter, generally referred to as "micromachining technique and the like").

Among methods other than those using the micromachining technique and the like, there are a method proposed to fabricate a photonic crystal by use of the epitaxial crystal growth technique (Japanese Patent Laid-Open No. 2001-237616) and a method proposed to use a mounter (Japanese Patent Laid-Open No. 2001-237617).

A photonic crystal is fabricated by use of two or more materials different in dielectric constant. In general, air is used in a large number of cases as one of the materials; however, in these years, there has been proposed fabrication of photonic crystals by combining dielectrics used in semiconductortechnologysuchas Si andGaAs, polymermaterials, photo curable resins, dielectric ceramics and the like (see, for example, Japanese Patent Laid-Open Nos. 2001-237616 and 2001-237617).

Although the use of and demand for photonic crystals have been rapidly expanding, any one of the micromachining technique and the like is complicated in processing, resulting in poor yield and long process time to be incompatible with mass production. As described above, although there has been proposed a method to fabricate a photonic crystal by use of the epitaxial crystal growth technique (Japanese Patent Laid-Open No. 2001-237616), types of dielectrics permitting epitaxial crystal growth are limited, and moreover, it takes an extremely long time to epitaxially grow a crystal of a dielectric to a predetermined thickness. There has also been proposed a method to use a mounter (Japanese Patent Laid-Open No. 2001-237617); however, demanded are techniques capable of obtaining photonic crystals in more simplified manner and in shorter periods of time.

Although a method is conceivable in which a dielectric block is beforehand fabricated and then a predeterminedpattern of holes are perforated, the pitch of the holes is small and the perforating itself is thereby made difficult.

Therefore, it is an object of the present invention to provide a method for producing a photonic crystal excellent in mass productivity. It is additional object of the present invention to provide a simplified technique to produce a compact and high-performance photonic crystal and a technique to produce a photonic crystal provided with a fine pattern.

### Disclosure of the Invention

For the purpose of achieving these objects, the present inventor has made various investigations. Consequently, the present inventor has found that it is effective to laminate a plurality of composite dielectrics in each of which a first dielectric and a second dielectric different in dielectric constant from the first dielectric are periodically arrayed in one and the same plane. More specifically, the present invention is a method for producing a photonic crystal in which a first dielectric and a second dielectric different in dielectric constant from the first dielectric are periodically arrayed, the method being characterized by comprising: fabricating a first composite dielectric in which the first dielectric and the second dielectric are periodically arrayed in one and the same plane; and laminating on the first composite dielectric a second composite dielectric in which the first dielectric and the second dielectric are periodically arrayed in one and the same plane.

The method for producing a photonic crystal of the present invention includes two types different in the materials constituting the first dielectric and the second dielectric. In a first type, the first dielectric is composed of a dielectric ceramic and the second dielectric is composed of air. In a second type, the first dielectric and the second dielectric each are composed of a dielectric ceramic.

In the first type, there can be obtained a dielectric block having a predetermined pattern of openings periodically arrayed by laminating a first composite dielectric and a second composite dielectric in each of which holes penetrating along the thickness direction thereof are formed in a predetermined pattern.

Because a dielectric ceramic is larger in relative dielectric constant than dielectrics used in semiconductor technology such as Si and GaAs, polymer materials and photo curable resins, the use of a dielectric ceramic as a dielectric makes it possible to achieve downsizing of a photonic crystal. On the other hand, combination of a dielectric ceramic with air enables the ratio between the relative dielectric constants of both dielectrics to be increased, yielding a broad band gap.

In the method for producing a photonic crystal of the present invention, the first and second composite dielectrics may be obtained by perforating holes in sheet-like members. Perforating of holes may be carried out either for each sheet-like member separately, or for a stack of two or more sheet-like members depending on the thickness thereof. In the present invention, by laminating composite dielectrics obtained by perforating holes in the sheet-like members, a predetermined pattern of openings are periodically arrayed in a dielectric block. In this way, without necessitating particularly complicated steps, it becomes possible to form in a short time a predetermined pattern of openings in a dielectric block. By adopting a novel technique to laminate sheet-like members (composite dielectrics) provided with holes perforated therein, there can also be obtained a photonic crystal having a fine pattern hardly obtainable in a conventional manner. In applying a conventional method in which a dielectric block is beforehand fabricated and then holes are perforated in the dielectric block to form a predetermined pattern of openings therein, a small-diameter hole perforating device is broken either when the perforating device is being inserted into the dielectric block or when the perforating device resides inside the dielectric block after having been inserted, thus making it difficult to finally obtain a photonic crystal having a fine pattern. On the contrary, according to the method for producing a photonic crystal of the present invention characterized in that thin composite dielectrics provided with holes perforated therein are beforehand fabricated, and then these dielectrics are laminated to obtain a dielectric block in which a predetermined pattern of openings are arrayed periodically, there can also be obtained a photonic crystal having a finer pattern than conventional photonic crystals.

By providing defects in a photonic crystal, the photonic crystal can be used as an optical waveguide; however, it is hardly possible to introduce afterward point defects into the interior of a dielectric block fabricated in a conventional manner. On the contrary, according to the method for producing a photonic crystal of the present invention in which composite dielectrics provided with holes perforated therein are laminated, it is easy to obtain a dielectric block having point defects introduced into the interior thereof.

The first and second composite dielectrics may be obtained by the printing techniques such as the screen printing.

When the first and second composite dielectrics are obtained by a printing technique, the lamination of the first and second composite dielectrics can also be carried out by a printing technique.

In the present invention, a dielectric block is fabricated by a novel method laminating composite dielectrics in each of which holes penetrating along the thickness direction thereof are formed in a predetermined pattern. Accordingly, it is possible to make the dielectric block be in a condition that a predetermined pattern of openings penetrate from the front surface to the back surface of the block and air is placed in the openings on completion of laminating the first and second composite dielectrics. As compared to a method in which after fabricating a dielectric block, a predetermined pattern of openings are formed by applying dry etching or the like to the dielectric block, the method of the present invention is advantageous in that a predetermined pattern of openings can be formed in a short time and with a high precision.

The above described method for producing a photonic crystal of the present invention can be applied to either a case where a photonic crystal having a two-dimensional periodic structure is fabricated or a case where a photonic crystal having a three-dimensional periodic structure is fabricated. In other words, by appropriately selecting the pattern of holes to be formed in a ceramic compositionmember, not only a photonic crystal having a two-dimensional periodic structure but a photonic crystal having a three-dimensional periodic structure can be obtained. In particular, when the present invention is applied to fabrication of a photonic crystal having a two-dimensional periodic structure, the time required to fabricate a photonic crystal can be made drastically shorter in the present invention than in conventional methods.

According to the production method of the first type, there can be produced a photonic crystal in which a first dielectric and a second dielectric different in relative dielectric constant from the first dielectric are included, and the first dielectric and the second dielectric are arrayed with a predetermined period, the photonic crystal being characterized in that the first dielectric is constituted with a dielectric block composed of a dielectric ceramic having openings of 2 mm or less in diameter formed in a predetermined pattern and the second dielectric is constituted with the air present in the openings.

In the above description, the first type has been described in which the first dielectric is constituted with a dielectric ceramic and the second dielectric is constituted with air. Now, the second type will be described in which the first dielectric and the second dielectric each are constituted with a dielectric ceramic.

In the second type, the first dielectric and the second dielectric each are a dielectric ceramic. Dielectric ceramics are larger in relative dielectric constant than dielectrics used in semiconductor technology such as Si and GaAs, polymer materials and photo curable resins. Accordingly, by making both of the first dielectric and the second dielectric be dielectric ceramics, there can be obtained a compact, high-strength photonic crystal. Additionally, by appropriately selecting the types of the first dielectric ceramic and the second dielectric ceramic so as for the ratio between the relative dielectric constants of both ceramics to be large, there can be obtained a photonic crystal having a broad band gap. Dielectric ceramics are advantageous also in that dielectric ceramics are smaller in material loss than dielectrics used in semiconductor technology, polymer materials and photo curable resins.

The second type includes two subtypes. A first subtype (the 2-1 type) is characterized by comprising a step of obtaining a dielectric block having a predetermined pattern of openings periodically arrayed by laminating a first sheet-like composite dielectric and a second sheet-like composite dielectric in each of which holes penetrating along the thickness direction thereof are formed in a predetermined pattern; and a step of placing the second dielectric in the openings.

There has been a method in which a dielectric block is beforehand fabricated, and then a predetermined pattern of openings are formed by perforating holes in the dielectric block. However, in the 2-1 type, a predetermined pattern of openings are periodically arrayed in a dielectric block by laminating composite dielectrics provided with holes perforated therein. In this way, without necessitating particularly complicated steps, it becomes possible to form in a short time a predetermined pattern of openings in a dielectric block. Perforating of through-holes may be carried out either for each composite dielectric separately, or for a stack of two or more composite dielectrics depending on the thickness thereof.

By appropriately selecting the pattern of holes to be formed in composite dielectrics, not only a photonic crystal having a two-dimensional periodic structure but a photonic crystal having a three-dimensional periodic structure can be obtained. It has hitherto been known that, as a photonic crystal having a two-dimensional periodic structure capable of giving a complete band gap, a complete band gap can be obtained by arraying air cylinders, in a dielectric on a triangular lattice; however, it has been difficult to fabricate such a photonic crystal because of the thin thickness of the dielectric. On the contrary, a photonic crystal having a two-dimensional periodic structure capable of giving a complete band gap can be easily obtained as follows: a dielectric block having a predetermined pattern of openings arrayed periodically is obtained by laminating composite dielectrics each made of a thin sheet, easy to perforate holes, provided with holes perforated therein, and then a second dielectric is filled in the openings of the dielectric block.

In the present invention, on completion of laminating the composite dielectrics, the dielectric block may be made to have a predetermined pattern of openings penetrating from the front surface to the back surface of the block. As compared to a method in which after a dielectric block is fabricated, a predetermined pattern of openings are formed by applying dry etching or the like to the dielectric block, the method of the present invention is advantageous in being capable of forming a predetermined pattern of openings in a short time and with a high precision.

Here, with regard to filling a second dielectric in the openings in a dielectric block, a method for filling in the openings of the dielectric block the second dielectric having been converted into a slurry is effective for the purpose of simplifying and shortening in time of the filling step. In this case, the second dielectric is contained as powder in the slurry. Although as a method for filling the second dielectric, there has been proposed a method in which the second dielectric is made to undergo epitaxial crystal growth (for example, Japanese Patent Laid-Open No. 2001-237616), types of dielectrics permitting epitaxial crystal growth are limited, and moreover, it takes an extremely long time to epitaxially grow a crystal of a dielectric to a predetermined thickness. On the contrary, according to the method of the present invention in which a powder slurry containing the second dielectric is prepared and filled in the openings of the dielectric block, a broader scope of selection of the second dielectric is available than in a case where epitaxial crystal growth is utilized, and the step of filling the second dielectric in the openings of the dielectric block can be completed in a short time.

When filling the slurry-like second dielectric in the openings of the dielectric block, a method based on suction or pressurization is preferable. In this case, it is preferable that the viscosity of the slurry (hereinafter referred to as "powder slurry") containing the second dielectric is appropriately set according to the method for filling the slurry and the opening size in the dielectric block. For example, when the powder slurry is filled by means of suction, the time required for the filling step can be further shortened by making the slurry binderless to decrease the viscosity thereof.

After the slurry-like second dielectric has been filled in the openings of the dielectric block, the first dielectric and the second dielectric may be co-fired. In this case, the first dielectric and the second dielectric are beforehand selected so as to meet the conditions enabling the co-firing. A formed body obtained by drying the dielectric block filled with the second dielectric may be used as it is as a photonic crystal; however, conversion into a firedbody further improves the mechanical strength and the dielectric constant.

In the method for producing a photonic crystal of the present invention, the thickness of a composite dielectric is preferably set at 1 to 800 µm. By constraining the thickness of the composite dielectric within this range, handling is made satisfactory when a predetermined pattern of holes are formed in the composite dielectric. On the other hand, when the sheet thickness is too thick, the sectional shape of the holes tends to be irregular. If a dielectric block is formed by laminating the composite dielectric having holes of irregular sectional shape, the dielectric block cannot take a desired pattern of openings, eventually resulting in difficulty in obtaining a photonic crystal having a desired band gap. In contrast, by constraining the thickness of the dielectric sheet within the range from 1 to 800 µm, handling is made satisfactory, and at the same time, it is made possible to form openings having a desired pattern in the dielectric block.

The above mentioned method for producing a photonic crystal of the present invention can be equally applicable to the case of producing a photonic crystal having a two-dimensional periodic structure and to the case of producing a photonic crystal having a three-dimensional periodic structure, as described above.

Now, a second subtype of the second type (the 2-2 type) will be described below. The gist of the 2-2 type resides in that there are laminated the ceramic composites (composite dielectrics) in which a plurality of dielectric ceramics each are periodically arrayed in one and the same plane. More specifically, the 2-2 type is characterized in that the first composite dielectric and the second composite dielectric are prepared respectively by arraying a first ceramic composition constituting the first dielectric on the site corresponding to the first dielectric, and by arraying a second ceramic composition constituting the second dielectric on the site corresponding to the second dielectric.

The first ceramic composition is constituted with a mixture composed of the first powdery dielectric ceramic, a dispersion medium, a binder resin and the like. Similarly, the second ceramic composition is constituted with a mixture composed of the second powdery dielectric ceramic, a dispersion medium, a binder resin and the like. No particular constraint is imposed on the method for arraying the first and second ceramic compositions; however, by use of a printing technique, both compositions each are arrayed in one and the same plane.

As a type for arraying the first ceramic composition and the second ceramic composition, for example, there can be cited a type in which, in a predetermined region, only the first ceramic composition is arrayed and then the second ceramic composition is arrayed (and vice versa). Alternatively, the first ceramic composition and the second ceramic composition may be printed in a predetermined region in a single printing step, for example, by use of the gravure printing technique or the like.

In the above described 2-2 type, two subtypes are included with regard to the lamination of the ceramic composites.

In a first subtype of the 2-2 type, a plurality of ceramic composites containing the first ceramic composition and the second ceramic composition are beforehand fabricated, and then the ceramic composites are laminated.

In a second subtype of the 2-2 type, a ceramic composite is fabricated by arraying, at the beginning, only a first ceramic composition and then a second ceramic composition. Next, the first ceramic composition (or the second ceramic composition) is arrayed on the ceramic composite, and then the second ceramic composition (or the first ceramic composition) is arrayed. It is intended to laminate the ceramic composites by repeating this step.

The method for producing a photonic crystal of the present invention may further include a step of firing a laminated body formed of the ceramic composites. By firing the laminated body formed of the ceramic composites, the first dielectric ceramic contained in the first ceramic composition and the second dielectric ceramic contained in the second ceramic composition are co-fired. Accordingly, when the firing step is carried out, the first dielectric ceramic and the second dielectric ceramic are beforehand selected so as to meet the conditions enabling the co-firing. The laminated body formed of the ceramic composites may be used as it is as a photonic crystal; however, conversion into a fired body as described above further improves the mechanical strength and the dielectric constant.

The above mentioned method for producing a photonic crystal of the present invention can be equally applicable to the case of producing a photonic crystal having a two-dimensional periodic structure and to the case of producing a photonic crystal having a three-dimensional periodic structure, as described above.

According to the above mentioned 2-1 type or the above mentioned 2-2 type, there can be obtained a novel photonic crystal in which a first block-like dielectric and a second cylindrical dielectric different in dielectric constant from the first dielectric are arrayed in a predetermined period, the photonic crystal being characterized in that: the first dielectric and the second dielectric each are composed of a dielectric ceramic; and the second dielectric is composed of a plurality of cylindrical members of 2 mm or less in diameter, and the second dielectric is arrayed with predetermined intervals so as to penetrate from the front surface to the back surface of the first dielectric.

### Brief Description of the Drawings

FIG. 1 is a diagram illustrating a method for producing a photonic crystal involved in the present invention;
FIG. 2 is a perspective view illustrating a photonic crystal in a first embodiment;
FIG. 3 is a table showing the dielectric properties of the dielectric ceramics usable in the present invention;
FIG. 4 is a perspective view illustrating a photonic crystal in a second embodiment;
FIG. 5 is a flowchart showing the case for producing a photonic crystal on the basis of a sheet technique;
FIG. 6 is a diagram schematically illustrating the step of fabricating dielectric block shown in FIG. 5;
FIG. 7 is a plan view illustrating an example of pattern to be used in producing a photonic crystal having a two-dimensional periodic structure;
FIG. 8 is a flowchart showing the case for producing a photonic crystal on the basis of a sheet technique;
FIG. 9 is a flowchart showing the case for producing a photonic crystal on the basis of a printing technique;
FIG. 10 is a diagram schematically illustrating the printing step shown in FIG. 9;
FIG. 11 is a flowchart showing the case for producing a photonic crystal on the basis of a printing technique;
FIG. 12 is a sectional view schematically illustrating the ceramic composite-fabricating step shown in FIG. 11;
FIG. 13 is a sectional view schematically illustrating the laminating step shown in FIG. 11;
FIG. 14 is a flowchart showing the case for producing a photonic crystal on the basis of a printing technique;
FIG. 15 is a diagram schematically illustrating the step of fabricating dielectric block shown in FIG. 14;
FIG. 16 is a flowchart showing the case for producing a photonic crystal on the basis of a printing technique;
FIG. 17 is a sectional view schematically illustrating the printing step shown in FIG. 16;
FIG. 18 is a diagram illustrating a variation for obtaining a ceramic composite;
FIG. 19 is a photo showing a sample 1 having a two-dimensional periodic structure obtained in Example 1;
FIG. 20 is a graph showing the measurement results of the reflection and transmission properties of the sample 1 having a two-dimensional periodic structure obtained in Example 1; and
FIG. 21 is a perspective view of Yablonovite known as a photonic crystal having a three-dimensional periodic structure.

### Best Mode for Carrying Out the Invention

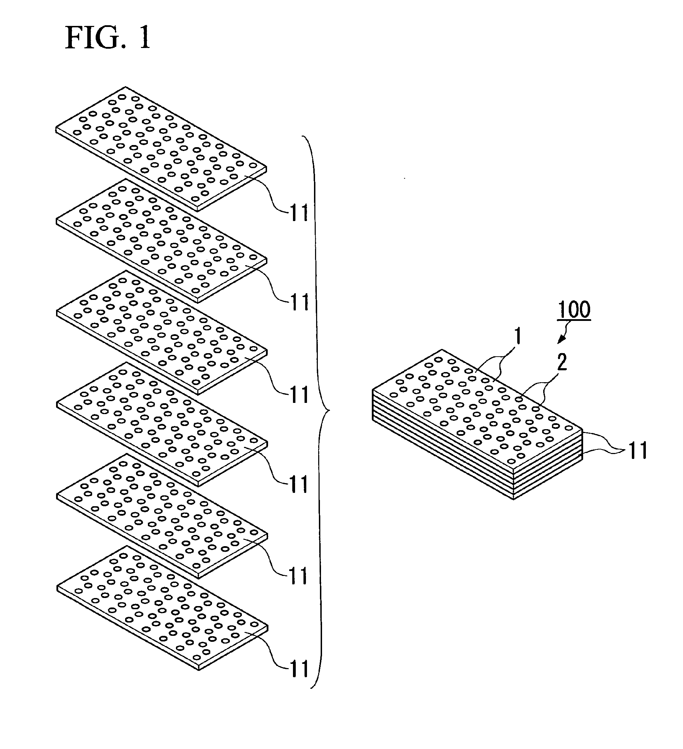

FIG. 1 is a diagram for illustrating a method for producing a photonic crystal of the present invention. As shown in FIG. 1, the present invention is characterized in that thin green sheets (composite dielectrics, sheet-like members) 11 are integrally laminated to produce a photonic crystal 100. The photonic crystal 100 includes a first dielectric portion 1 comprising a first dielectric and second dielectric portions 2 comprising a second dielectric.

The present invention includes a type (hereinafter referred to as "the first type") in which the any one of the first dielectric and the second dielectric is a dielectric ceramic and the other is air, and a type (hereinafter referred to as "the second type") in which both of the first dielectric and the second dielectric are a dielectric ceramic.

The structure of the photonic crystal 100 and a method for producing the photonic crystal 100 will be successively described below.

### [First Embodiment]

### <The structure of a photonic crystal>

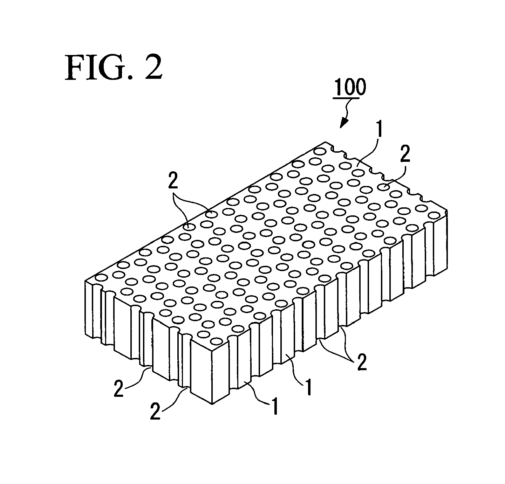

FIG. 2 is a perspective view illustrating a photonic crystal in the first embodiment.

The photonic crystal 100 includes a first dielectric portion 1 and second dielectric portions 2. The photonic crystal 100 has a two-dimensional periodic structure, and the second dielectric portions 2 are arrayed so as to penetrate from the front surface to the back surface of the photonic crystal 100.

In the photonic crystal 100 in the first embodiment, a dielectric ceramic constitutes the first dielectric portion 1 and air as a dielectric constitutes the second dielectric portions 2.

The dielectric ceramic constituting the first dielectric portion 1 is larger in relative dielectric constant than dielectrics used in semiconductor technology such as Si and GaAs, polymer materials and photo curable resins, and downsizing of elements is thereby made possible. This is because the wavelength in a dielectric is inversely proportional to the square root of the relative dielectric constant, and consequently, the larger is the relative dielectric constant of a dielectric material, the larger is the wavelength shortening effect thereof, favoring downsizing of elements.

On the other hand, air constituting the second dielectric portions 2 has an advantage that the loss thereof is small. The relative dielectric constant of air is 1, and accordingly, the use of air as the second dielectric makes it possible to increase the ratio between the relative dielectric constant of the first dielectric portion 1 and the relative dielectric constant of the second dielectric portion 2. The larger is the ratio between the relative dielectric constant of the first dielectric portion 1 and the relative dielectric constant of the second dielectric portions 2, the band gap can be formed to cover the broader band.

Thus, the use of a dielectric ceramic as the first dielectric and the use of air as the second dielectric make it possible to form a broad band gap, and consequently, there can be obtain the photonic crystal 100 which is low in loss and favors downsizing of elements.

In the photonic crystal 100 of the first embodiment, air as the second dielectric resides in cylindrical openings of 2 mm or less in diameter. As will be described in more detail, in the present invention, the photonic crystal 100 is produced by laminating ceramic composition members having holes which penetrate along the thickness direction thereof and are formed in a predetermined pattern, and accordingly, it is made possible to form fine openings of 2 mm or less in diameter in the photonic crystal 100. For the purpose of increasing the strength of the photonic crystal 100, it is effective to make fine the size of the openings in which the second dielectric is placed, namely, the size of the second dielectric portions 2.

According to the properties demanded for the photonic crystal 100, the array, size, shape and the like of the openings in which the second dielectric is placed can be appropriately set. Thus, the openings in which the second dielectric is placed can have a size more than 2 mm in diameter, and needless to say, may be rectangular parallelepiped but not cylindrical in shape.

The dielectric ceramic as the first dielectric can be appropriately selected according to the properties demanded for the photonic crystal 100.

As described above, the larger is the ratio between the relative dielectric constant of the first dielectric and the relative dielectric constant of the second dielectric, the band gap can be formed to cover the wider range. Consequently, a dielectric ceramic having a high relative dielectric constant is preferable. A preferable ratio between the relative dielectric constants depends on the properties and the like of the finally desired photonic crystal 100.

As the first dielectric, dielectric ceramics each having a small material loss in the frequency band being used are desirable. This is because when it is intended to produce the photonic crystal 100 by use of a dielectric ceramic, the material loss caused by such materials cannot be negligible depending on the use of the photonic crystal 100. By constituting the photonic crystal 100 with air having a nearly vanishing loss to be negligible and a dielectric ceramic having a small loss, elements for which the photonic crystal 100 is used can be made further smaller in loss.

As the dielectric ceramic, the following materials can be used: Al₂O₃ based ceramics, TiO₂ based ceramics, MgTiO₃ based ceramics, CaTiO₃ based ceramics, SrTiO₃ based ceramics, CaZrO₃ based ceramics, BaZrO₃ based ceramics, MgTiO₃-CaTiO₃ based ceramics, (Zr, Sn)TiO₄ based ceramics, BaTi₄O₉ based ceramics, Ba₂Ti₉O₂₀ based ceramics, La₂Ti₂O₇ based ceramics, Nd₂Ti₂O₇ based ceramics, BaO-TiO₂-rare earth based ceramics, Ba (Mg_{1/3}Nb_{2/3})₃ based ceramics, Ba (Mg_{1/3}Ta_{2/3})₃ based ceramics, Ba (Zn_{1/3} Nb_{2/3})₃ based ceramics, Ba(Zn_{1/3}Ta_{2/3})₃ based ceramics, CaTO₃-NdAlO₃ based ceramics, (Ba, Pb)Nd₂Ti₄O₁₂ based ceramics, (Ba, Pb) (Nd, Bi)₂Ti₄O₁₂ based ceramics, SiO₂ based ceramics, glass composite materials and the like. These materials can be used each alone or in combinations of two or more thereof.

Here, the Al₂O₃ based ceramics mean, in terms of composition, a material containing only Al₂O₃ or materials containing small amounts of additives in addition to Al₂O₃, and in terms of structure, materials retaining as the main component the Al₂O₃ crystal structure. This is also the case for the other ceramics.

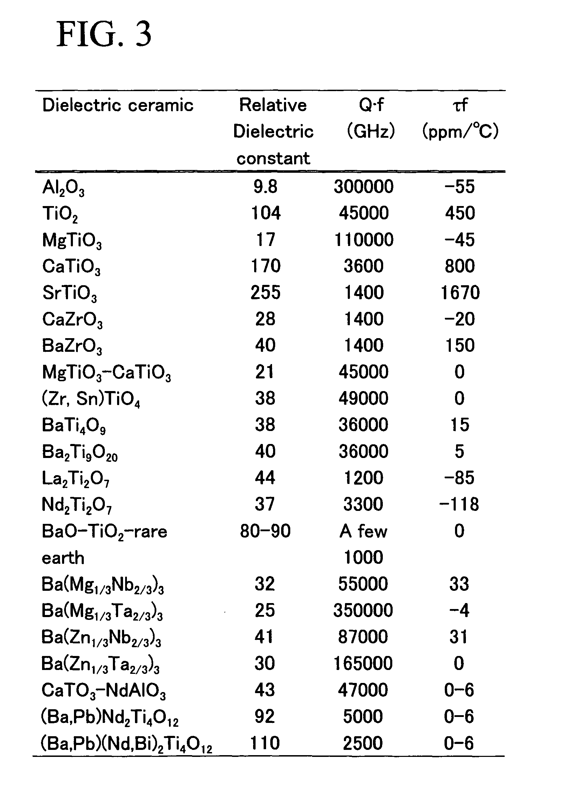

FIG. 3 shows the relative dielectric constants, Q·f (the product of the Q value and the frequency) values, and τf (the thermal coefficient of the resonant frequency) values of the representative dielectric ceramics of the above described ones. Of the ceramics shown in FIG. 3, BaO-TiO₂-rare earth based ceramics, (Ba, Pb) Nd₂Ti₄O₁₂ based ceramics and (Ba, Pb) (Nd, Bi)₂Ti₄O₁₂ based ceramics, high in relative dielectric constant, low in loss and excellent in temperature properties, are particularly preferable.

### [Second Embodiment]

### <The crystal structure of a photonic crystal>

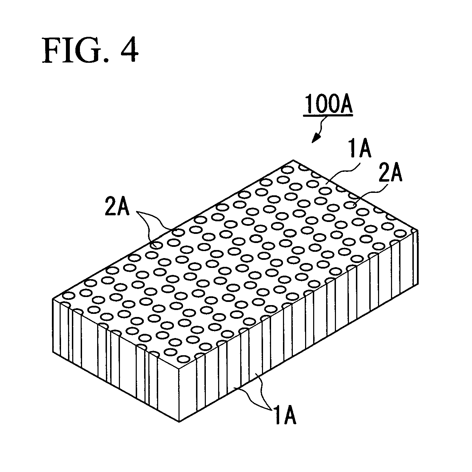

FIG. 4 is a perspective view illustrating a photonic crystal in the second embodiment.

As shown in FIG. 4, a photonic crystal 100A includes a first dielectric portion 1A and second dielectric portions 2A. The first dielectric portion 1A is constituted with a first dielectric ceramic and the second dielectric portions 2A are constituted with a second dielectric ceramic. The photonic crystal 100A has a two-dimensional periodic structure, and the second dielectric portions 2A penetrate from the front surface to the back surface of the photonic crystal 100A.

The photonic crystal 100A of the second embodiment is characterized by using a dielectric ceramic for each of the first dielectric portion 1A and the second dielectric portions 2A. By using two dielectric ceramics, there can be obtained a photonic crystal 100A having a high strength and excellent properties, making downsizing of elements possible.

According to the properties demanded for the photonic crystal 100A, the first dielectric ceramic and the second dielectric ceramic are appropriately selected from, for example, barium titanate based ceramics, lead titanate based ceramics, strontium titanate based ceramics, titanium dioxide based ceramics, barium-neodymium-titanium based ceramics, alumina based ceramics, silica based ceramics, glass composite materials and the like.

Now, the selection criteria for the first dielectric ceramic and the second dielectric ceramic will be described below.

### <First selection criterion>

The larger is the ratio between the relative dielectric constant of the first dielectric ceramic and the relative dielectric constant of the second dielectric ceramic, the band gap can be formed to cover the wider range. Accordingly, the first dielectric ceramic and the second dielectric ceramic are selected in such a way that the ratio between the relative dielectric constant of the first dielectric ceramic and the relative dielectric constant of the second dielectric ceramic is large.

In general, the dielectric constant of a high frequency dielectric ceramic is of the order of 3 to 100; accordingly, when a dielectric ceramic having a low relative dielectric constant is selected as the first dielectric ceramic, a broad band gap can be formed by selecting a dielectric ceramic having a high relative dielectric constant as the second dielectric ceramic. On the contrary, a broad band gap may be formed by selecting a dielectric ceramic having a high relative dielectric constant as the first dielectric ceramic and by selecting a dielectric ceramic having a low relative dielectric constant as the second dielectric ceramic.

The preferable ratio between the relative dielectric constants depends on the properties and the like of the finally desired photonic crystal 100A.

### <Second selection criterion>

Dielectric ceramics which are low in material loss in the frequency band being used are selected as the first dielectric ceramic and the second dielectric ceramic. This is because when it is intended to produce the photonic crystal 100A by use of a plurality of dielectric ceramics, the material loss caused by such materials cannot be negligible depending on the use of the photonic crystal 100A. By constituting the photonic crystal 100A by use of dielectric ceramics low in loss, the loss of elements using the photonic crystal 100A can be made small.

### <Third selection criterion>

As will be described later in detail, in the photonic crystal 100A of the present embodiment, the first dielectric portion 1A and the second dielectric portions 2A are co-fired. Accordingly, the first dielectric ceramic and the second dielectric ceramic are selected so as to enable the co-firing; more specifically, there are selected dielectric ceramics well matched each other in thermal shrinkage. Whether the dielectric ceramics are well matched each other or not may be judged on the basis of the shrinkage ratio or the like obtained when fired at the same temperature.

On the basis of the above described selection criteria, the first dielectric ceramic and the second dielectric ceramic are selected. In the present embodiment, the following description will be made on the basis of an example in which the photonic crystal 100A is produced by using a dielectric ceramic having a low relative dielectric constant as the first dielectric ceramic and a dielectric ceramic in turn having a high relative dielectric constant as the second dielectric ceramic so that the ratio between the relative dielectric constant of the first dielectric ceramic and the relative dielectric constant of the second dielectric ceramic may be large.

As the first dielectric ceramic constituting the first dielectric portion 1A, ceramic materials low in relative dielectric constant, glass composite materials and the like are used. Specifically, as the first dielectric ceramic, there can be used BaO-SiO₂-Al₂O₃-B₂O₃ based ceramics, SiO₂ based ceramics, B₂O₃ based ceramics, 2MgO-SiO₂ based ceramics, Al₂O₃ based ceramics, Al₂O₃-TiO₂ based ceramics, ZrO₂ based ceramics and the like. These are suitable for the first dielectric ceramic because all these have the relative dielectric constants as low as of the order of 2 to 20, and the dielectric losses of all these are low.

As the second dielectric ceramic constituting the second dielectric portions 2A, ceramic materials high in relative dielectric constant, glass composite materials and the like are used. Specifically, as the second dielectric ceramic, there can be used BaO-Nd₂O₃-TiO₂-B₂O₃-ZnO₂-CuO based ceramics, Al₂O₃-TiO₂ based ceramics, TiO₂ based ceramics, BaO-Bi₂O₃-Nd₂O₃-TiO₂ based ceramics, BaO-Bi₂O₃-Nd₂O₃-TiO₂-SrTiO₃ based ceramics, BaO-PbO-Nd₂O₃-TiO₂ based ceramics, BaNd₂Ti₅O₁₄ based ceramics, BaSm₂Ti₅O₁₄ based ceramics, Ba (Zn, Nb) O₃ based ceramics, BaTi₄O₉ based ceramics, Ba₂Ti₉O₂₀ based ceramics, (Zr, Sn)TiO₄ based ceramics, Ba(Zn, Ta)O₃ based ceramics, Ba(Mg, Ta)O₃ based ceramics, MgTiO₃-CaTiO₃ based ceramics and the like. These are suitable for the second dielectric ceramic because all these have the relative dielectric constants as high as of the order of 5 to 200 and the dielectric losses of all these are low.

Now, desirable combinations of the first dielectric ceramic and the second dielectric ceramic will be presented below.

### <Combination 1>

The first dielectric ceramic:
   BaO-SiO₂-Al₂O₃-B₂O₃ based dielectric ceramic (relative dielectric constant: 6.4)
The second dielectric ceramic:
   BaO-Nd₂O₃-TiO₂-B₂O₃-ZnO₂-CuO based dielectric ceramic (relative dielectric constant: 75.4)

### <Combination 2>

The first dielectric ceramic:
   SiO₂-B₂O₃-Al₂O₃ based dielectric ceramic (relative dielectric constant: 4.7)
The second dielectric ceramic:
   TiO₂-BaO-Nd₂O₃-glass based dielectric ceramic (relative dielectric constant: 22)

Of the above combinations, the combination of BaO-SiO₂-Al₂O₃-B₂O₃ based dielectric ceramic having a relative dielectric constant ε of 6.4 with BaO-Nd₂O₃-TiO₂-B₂O₃-ZnO₂-CuO based dielectric ceramic having a relative dielectric constant of 75.4 is particularly preferable. This is because this combination gives a large relative dielectric constant ratio of approximately 11.8 and these ceramics are well matched each other in thermal shrinkage, so that the co-firing thereof is possible.

When a photonic crystal is produced by use of two dielectric materials, air is frequently used as one of the dielectric materials. On the contrary, as for the photonic crystal 100A in the second embodiment, a plurality of dielectric ceramics, namely, the first dielectric ceramic and the second dielectric ceramic are used to constitute the photonic crystal 100A, so that the strength of the product can be improved.

In the above, detailed description has been made on the photonic crystal 100 in which a dielectric ceramic and air are used and the photonic crystal 100A in which two dielectric ceramics are used. The dimensions of the photonic crystals 100 and 100A each are needed to be determined according to the frequency to be used. For example, when a periodic structure covering 4 to 5 periods is assumed for the K band (from 18 to 26. 5 GHz), the dimensions of the photonic crystals 100 and 100A respectively of the first and second embodiments are of the order of (8 to 12) mm x (2 to 6) mm x (16 to 20) mm. It is to be noted that the "period" as referred to here means the period with which the second dielectric portions 2 (or the second dielectric portions 2A) are arrayed.

The photonic crystals 100 and 100A in the first and second embodiments have a band gap particularly in the region from microwave to submillimeter wave, and are suitably used as waveguides, filters, resonators, dividers and the like.

Next, the methods for producing the photonic crystals 100 and 100A will be described below.

As a first process, an example is presented in which at the beginning a dielectric block is formed by use of the so-called sheet technique and then the photonic crystal 100 is obtained. As will be described in detail later on, as the first process, an example is presented in which holes penetrating along the thickness direction are formed in a predetermined pattern in dielectric ceramic sheets having been beforehand prepared, the hole-perforated dielectric ceramic sheets are laminated, and thus there is formed a dielectric block having a predetermined pattern of openings formed therein.

### [First Process]

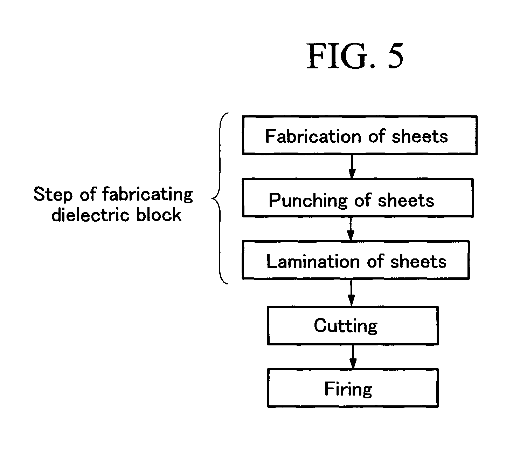

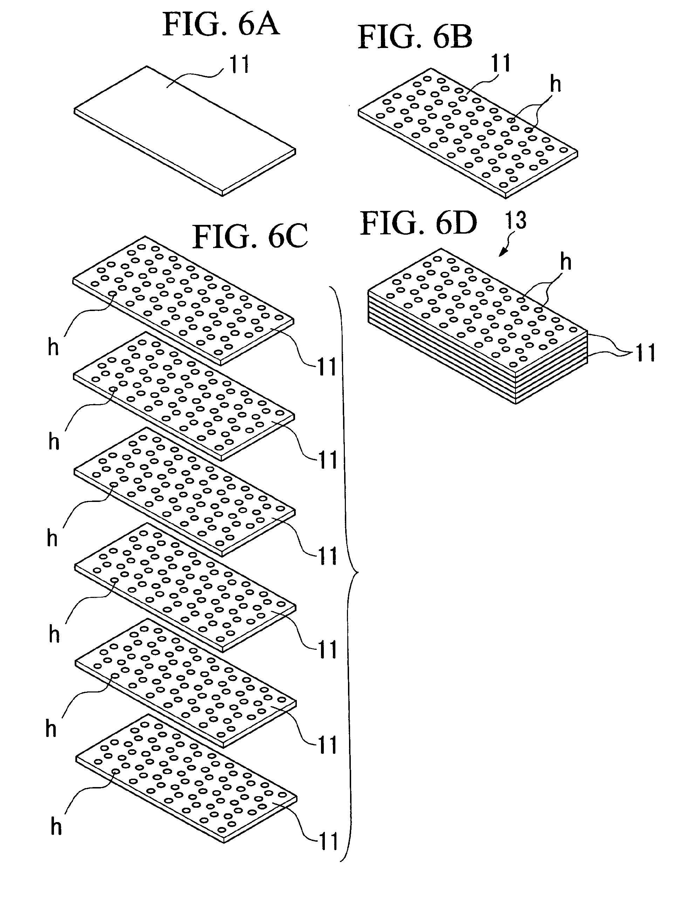

FIG. 5 is a flowchart showing an example of producing the photonic crystal 100 shown in FIG. 2. FIG. 6 is a diagram schematically illustrating the steps for producing a dielectric block shown in FIG. 5.

As shown in FIG. 5, the first process includes a sheet-fabricating step in which a dielectric ceramic powder, a resin and the like are mixed together to form sheets; a sheet-punching step in which holes penetrating along the thickness direction are perforated in a predetermined pattern in each of the sheets obtained in the sheet-fabricating step; a sheet-laminating step in which the sheets hole-perforated in a predetermined pattern are laminated to obtain a dielectric block, a cutting step in which the dielectric block is cut to a predetermined shape; and a firing step in which the formed body cut to the predetermined shape is fired.

In the first process, a dielectric block including the first dielectric is fabricated by passing through the sheet-fabricating step, the sheet-punching step, and the sheet-laminating step. Accordingly, the sheet-fabricating step, the sheet-punching step, and the sheet-laminating step will be collectively referred to as "the step of fabricating dielectric block," as the case may be. By passing through the step of fabricating dielectric block, air as the second dielectric is arrayed in the dielectric block including the first dielectric.

Each of the steps shown in FIG. 5 will be described below in detail.

### <Sheet-fabricating step>

In the sheet-fabricating step, at the beginning, a slurry is obtained by mixing a dielectric ceramic powder, a binder resin and a dispersion medium by means of a ball mill, a kneader, or the like. The mean particle size of the dielectric ceramic powder may be set at the order of 0.1 to 20 µm. The use of a dielectric ceramic powder having a mean particle size of the order of 0.1 to 20 µm, a high density forming is made possible, and at the same time, powder aggregation can be suppressed and a periodic structure can be formed stably. The mean particle size of the dielectric ceramic powder is preferably 0.5 to 10 µm, and more preferably 0.5 to 5 µm.

As the binder resin, there can be used acryl based resins, butyral based resins, ethylcellulose based resins and the like. As the dispersion medium, there can be used various organic solvents such as acetone, toluene, methyl ethyl ketone and ethanol. The proportions of the dielectric ceramic, the binder resin and the dispersion medium may be set at the order of (10 to 40):(5 to 20):(40 to 85) by vol%.

According to need, there can be further added dispersants such as olefin/maleic acid copolymer and oleic acid. When a dispersant is added, the addition amount thereof may be set at the order of 0.1 to 5 wt% in relation to the dielectric ceramic.

The slurry thus obtained is applied onto a film (for example, a PET film) by use of a doctor-blade method or the like, and dried to yield a green sheet 11 as shown in FIG. 6A.

In the green sheet 11, holes penetrating along the thickness direction are perforated in a predetermined pattern in the sheet-punching step to be described later on. When the thickness of the green sheet 11 is too thick, the sectional shape of the holes penetrating the green sheet 11 is made irregular. More specifically, the diameter of a hole as seen on the front surface of the sheet and the diameter of the hole as seen on the back surface of the sheet tend to differ so as for the sectional shape of the hole to be trapezoidal. When the green sheets 11 having irregular sectional shapes of holes are laminated to be subjected to thermocompression bonding, the shape of the openings in the dielectric block is made irregular, so that a desired pattern cannot be obtained, and eventually, a photonic crystal 100 having a desired band gap can hardly be obtained, leading to an unpreferable result. On the other hand, when the thickness of the green sheets 11 is too thin, the strength of the green sheets 11 is low, making the handling thereof difficult. Accordingly, the thickness of the green sheets 11 may be appropriately selected within a range from 1 to 800 µm, more preferably from 10 to 500 µm, and further preferably from 20 to 200 µm. It is to be noted that a desirable thickness depends also on the perforating technique, and is needed to be appropriately set according to the perforating technique.

### <Sheet-punching step>

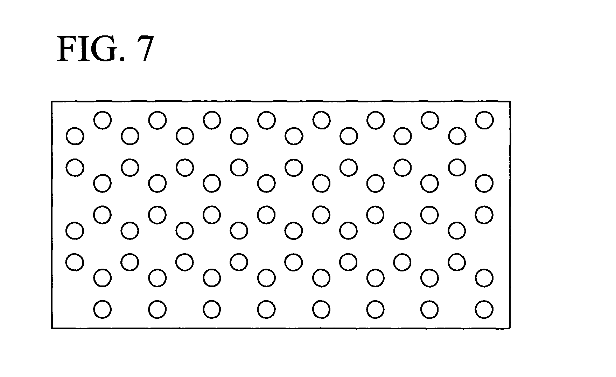

As shown in FIG. 6B, in the sheet-punching step, holes h penetrating along the thickness direction are perforated in a predetermined pattern in the green sheets 11 obtained in the sheet-fabricating step. The pattern is appropriately determined according to whether the finally desired photonic crystal involves a two-dimensional periodic structure, a three-dimensional periodic structure, or the like. For example, when it is desired to obtain the photonic crystal 100 shown in FIG. 2, having a two-dimensional periodic structure, a punch having a pattern shown in FIG. 7 may be prepared. By using such a punch, in a single step, a plurality of holes h can be perforated in each of the green sheets 11. Depending on the thickness of a green sheet 11, punching may be carried out for a stack of several green sheets 11. It is not an indispensable requirement to use a punch having such a pattern as shown in FIG. 7, but a single-hole punch may be used to perforate holes in the green sheets 11.

For the purpose of obtaining green sheets 11 having holes perforated therein in a predetermined pattern, in addition to punching, methods such as drilling and laser irradiation are applicable.

The size of the holes h is appropriately set according to the properties and the like of the finally desired photonic crystal 100. By perforating the holes h in the green sheet 11, namely, a sheet-like member by the above described punching or the like, a finer pattern of perforated holes can be formed in the green sheet 11 as compared to conventional cases where holes are perforated in block-like members by means of dry etching or the like.

The size of the holes h perforated in the sheet-punching step is determined in consideration of the coefficient of shrinkage in firing. For example, when the photonic crystal 100 is desired in which openings of 1 mm in diameter are formed after firing, the holes h of the order of 1.1 to 1.3 mm in diameter may be perforated in the sheet-punching step. By assuming that the dielectric block 13 prior to firing has a relative density of the order of 50 to 60%, and the relative density is made to be 100% by firing, the coefficient of linear shrinkage is derived to be 15.7 to 20.6%. In this case, when the photonic crystal 100 is desired in which openings of 1 mm in diameter are formed after firing, the holes h of the order of 1.19 to 1.26 mm in diameter may be perforated in the sheet-punching step.

When it is desired to finally obtain a photonic crystal having a three-dimensional periodic structure, the three-dimensional structure can be assumed to be a laminated body formed of a plurality of thin layers, and accordingly the green sheets 11 each can be perforated to generate holes in conformity with the form of the corresponding layer. The hole-perforating techniques are the same as those in fabricating the photonic crystal 100 having a two-dimensional periodic structure.

### <Sheet-laminating step>

As shown in FIG. 6C, in the sheet-laminating step, the green sheets 11 each having holes h perforated therein in a predetermined pattern are laminated to be subjected to thermocompression bonding. The thermocompression bonding may be carried out every time when one of the green sheets 11 is laminated, or after two or more of the green sheets 11 are laminated. By laminating and thermocompression bonding of the green sheets 11, there is finally obtained a dielectric block 13 having such a predetermined pattern of openings formed therein as shown in FIG. 6D. In other words, the thermocompression bonding is carried out to integrate the green sheets 11.

The heating temperature in the thermocompression bonding depends on the resin component used in fabricating the green sheets 11. For example, when the resin used in fabricating the sheets is acrylic resin, the heating temperature may be set at 70 to 90°C. The pressure can be appropriately set according to the thickness of the sheets; it can be of the order of 20 to 80 kgf/cm². When the temperature concerned is too high, or when the pressure is too high, the shape of the holes h formed in the green sheets 11 is drastically varied, and the openings in the dielectric block 13 are collapsed. If the openings in the dielectric block 13 are collapsed, it is hardly possible to finally obtain the photonic crystal 100 having a desired pattern. On the other hand, when the temperature concerned is too low, or when the pressure is too low, the mutual bonding of the green sheets 11 reaches an insufficient level to cause delamination. When the mutual bonding of the green sheets 11 is insufficient, delamination and cracking are caused after firing, and it is also hardly possible to finally obtain the photonic crystal 100 having a desired pattern.

In the dielectric block 13 obtained by laminating the green sheets 11 having the holes h perforated therein, a predetermined pattern of openings are formed. In the example of FIG. 6D, a large number of cylindrical openings are formed so as to penetrate from the front surface to the back surface of the dielectric block 13.

FIG. 6D shows an example in which the lamination number of the green sheets 11 is 6; however, no particular constraint is imposed on the lamination number, and the lamination number is appropriately determined according to the finally desired size of the photonic crystal 100 and the thickness of the green sheets 11.

As describe above, the dielectric block 13 is obtained by passing through the sheet-fabricating step, the sheet-punching step and the sheet-laminating step.

### <Cutting step>

In the cutting step, according to the use of the finally obtained photonic crystal 100, the dielectric block 13 is cut to a predetermine shape (the dielectric block 13 having been cut to a predetermined shape is referred to as "a formed body, " as the case may be).

### <Binder removal treatment>

The formedbody contains a large amount of resin components in the portions corresponding to the green sheets 11, and hence is beforehand subjected to the binder removal treatment in advance of the firing step. The binder removal treatment can be carried out under the ordinary conditions, namely, the conditions that the binder is decomposed but the neck growth is not yet started. For example, the binder removal treatment is carried out in air, with a temperature raising rate of 30 to 120°C/h, a retention temperature of 400 to 600°C, and a retention time of 0 to 2 hours.

The formed body obtained on completion of the binder removal treatment may be used as it is as the photonic crystal 100. The dielectric ceramic in the formed body constitutes the first dielectric portion 1, and the air residing in the predetermined pattern of openings in the first dielectric portion 1 constitutes the second dielectric portions 2.

By carrying out the below described firing step to convert the formed body into a fired body, there can be obtained the photonic crystal 100 further improved in mechanical strength and relative dielectric constant.

### <Firing step>

After carrying out the binder removal treatment, the firing step is carried out. In the firing step, the formed body is heated and retained in a predetermined atmosphere and at a predetermined temperature.

The firing conditions can be appropriately set according to the type of the dielectric ceramic and the like. For example, the firing is carried out in air, with a temperature raising rate of 300 to 1200°C/h, a retention temperature of 800 to 1000°C, and a retention time of 0.1 to 3 hours.

As described above in detail, in the first process, the dielectric block 13 is obtained in which a predetermined pattern of openings is periodically arrayed, by perforating holes h penetrating along the thickness direction in a predetermine pattern in the green sheets 11, and by laminating the green sheets 11 having a predetermined pattern of holes h perforated therein. According to the method for producing the photonic crystal 100 in the first process needing no complicated steps, the photonic crystal 100 can be produced easily and in a short time. Accordingly, the method for producing the photonic crystal 100 in the first process is excellent in mass productivity.

In the first process, the photonic crystal 100 is produced by use of a dielectric ceramic higher in relative dielectric constant than other dielectric materials, so that the sizes of elements can be reduced. Moreover, the photonic crystal 100 is produced by use of a dielectric ceramic having a high dielectric constant and air having a relative dielectric constant of 1, so that the ratio between the relative dielectric constants of both dielectrics can be made large and a broad band gap can be obtained.

In the first process adopting a sheet laminating technique, there can be easily obtained the photonic crystal 100 having fine holes h penetrating from the front surface to the back surface thereof. There is presented an example in which the patterns of perforated holes in the respective green sheets 11 are the same; however, needless to say, the pattern of perforated holes can be appropriately varied from sheet to sheet. For example, when a photonic crystal having a three-dimensional periodic structure is produced, the pattern of perforated holes of green sheets 11 may be appropriately varied from sheet to sheet. For example, when Yablonovite shown in FIG. 21 is fabricated by means of the first process, there may be appropriately varied from sheet to sheet the pattern of perforated holes in which the holes h penetrating along the thickness direction are arrayed in a triangular lattice. As described above, in the first process adopting a sheet laminating technique, the photonic crystal 100 having a desired periodic structure can be obtained by appropriately selecting the pattern shapes, and hence the degree of freedom with respect to the periodic structure is high.

Next, as a second process, there will be described below an example in which the dielectric block 13 is formed by use of the so-called sheet technique, and the photonic crystal 100A is thereby obtained.

### [Second Process]

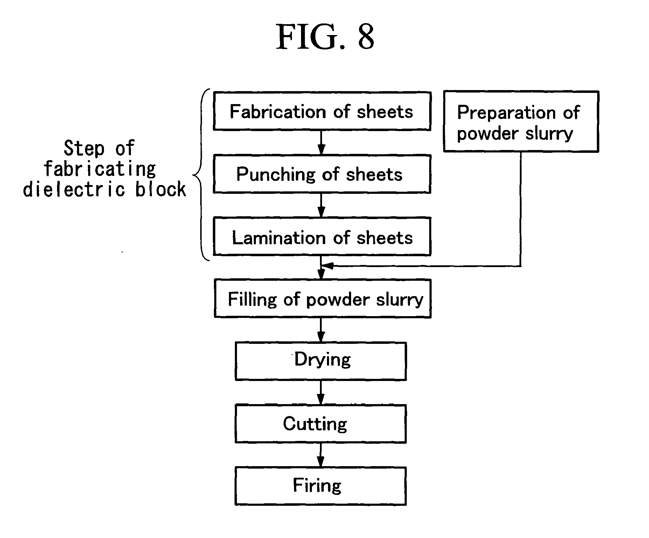

FIG. 8 is a flowchart showing an example of the method for producing the photonic crystal 100A shown in FIG. 4.

As shown in FIG. 8, in the second process, the dielectric block 13 is fabricated under the same conditions as in the first process. And, the photonic crystal 100A is produced in which the first dielectric ceramic and the second dielectric ceramic are periodically arrayed, by filling a powder slurry containing the second powdery dielectric ceramic in the openings of the dielectric block 13.

By passing through a powder slurry-filling step and a drying step, the powder slurry containing the second dielectric ceramic forms the second dielectric portions 2A.

Now, the characteristic parts of the second process will be described in detail.

First, a powder slurry-preparing step to be carried out in advance of the powder slurry-filling step will be described.

### <Powder slurry-preparing step>

In the powder slurry-preparing step, the second dielectric ceramic, a dispersion medium and a dispersant are mixed together by means of a kneader or the like to prepare a powder slurry having a predetermined viscosity. By making the powder slurry binderless, more specifically, without adding any binder resin, the viscosity of the powder slurry can be prevented from being too high.

As the second dielectric ceramic, there can be used the above described dielectric ceramics each having a high relative dielectric constant.

On the basis of the same reason as for the first dielectric ceramic, the mean particle size of the second dielectric ceramic may be set at the order of 0.1 to 20 µm. The mean particle size of the second dielectric ceramic is preferably 0.5 to 10 µm, and more preferably 0.5 to 5 µm.

For the purpose of matching the behaviors of the first dielectric ceramic and the second dielectric ceramic at the time of firing, it is preferable to approximately equalize the size of the first dielectric ceramic and the size of the second dielectric ceramic.

As the dispersion medium, terpineol, butyl carbitol and the like can be used. By appropriately selecting the types of the dispersion mediums and the amounts thereof, the viscosity of the powder slurry can be regulated. For example, butyl carbitol has a low viscosity and terpineol has a high viscosity, and hence by mixing both with appropriate proportions to be used as the dispersion medium, the viscosity of the powder slurry can be appropriately regulated.

The powder concentration in the powder slurry is set so as to be equal to the powder density in the dielectric block 13. When the dielectric block 13 is fabricated under the above described conditions, the proportions of the second dielectric ceramic and the dispersion medium may be set at the order of (40 to 55) : (45 to 60), and more preferably at the order of (45 to 55) : (45 to 55) by vol%. The viscosity of the powder slurry is needed to be appropriately set according to the size of the holes h formed in the green sheets 11. Additionally, the viscosity of the powder slurry is set in consideration of the drying shrinkage in the drying step.

Dispersants such as oleic acid can be further added according to need. When a dispersant is added, the addition amount thereof may be set at the order of 0. 2 to 5 wt% in relation to the second dielectric ceramic. No particular constraint is imposed on the dispersant type; however, olefin/maleic acid copolymer is preferable because this copolymer is effective in decreasing the viscosity of the powder slurry. When olefin/maleic acid copolymer is selected as the dispersant, the preferable addition amount thereof is of the order of 0.2 to 5 wt% in relation to the second dielectric ceramic.

As described above, by making the powder slurry binderless, the viscosity of the powder slurry can be set at a low level, more specifically, at such a low level as suitable for the slurry-filling step to be described below. According to the size of the holes h formed in the green sheets 11 and the slurry-filling method, the viscosity of the powder slurry may be regulated by appropriately adding a resin component (for example, ethylcellulose).

### <Powder slurry-filling step>

In the powder slurry-filling step, the powder slurry is filled in the openings of the dielectric block 13. The powder slurry-preparing step has only to be carried out in advance of the powder slurry-filling step, and is not necessarily needed to be carried out at the same stage as the sheet-fabricating step.

As the powder slurry-filling method, suction is preferable. For the purpose of filling by suction the powder slurry in the openings of the dielectric block 13, at the beginning the dielectric block 13 is placed on a porous suction plate made of a metal, a ceramic, polytetrafluoroethylene (brand name: Teflon) or the like. Then, on the upper side of the dielectric block 13, namely, on the side of the dielectric block 13 not in contact with the suction plate, a sufficient amount of the powder slurry containing the second dielectric ceramic is placed. Successively, by using a pump, the powder slurry is sucked from the under side of the suction plate. Thus, the powder slurry can be filled densely in the openings of the dielectric block 13. After completion of the suction, the powder slurry left on the upper side of the dielectric block 13 is removed by use of a squeegee or the like.

The viscosity of the powder slurry is appropriately set according to the size of the openings in the dielectric block 13. When the viscosity is too high, suction of the powder slurry is difficult, while when the viscosity is too low, pores tend to be generated in the formed body, namely, the formed body obtained by drying the dielectric block 13 filled with the powder slurry. Accordingly, the viscosity of the powder slurry is set at a level to permit efficient filling of the powder slurry in the openings of the dielectric block 13.

As the method for filling the powder slurry, a filling method based on pressurization is preferable, in addition to the one based on suction. When the filling method based on pressurization is adopted, at the beginning a sufficient amount of the powder slurry is placed on the upper side of the dielectric block 13. Then, the powder slurry is pressurized by means of a method based on the air pressure, application using a squeegee or the like, and can be thereby filled in the openings of the dielectric block 13.

### <Drying step>

In the drying step, the formed body is obtained by drying the dielectric block 13 filled with the powder slurry. No particular constraint is imposed on the drying method, and accordingly, either natural drying or drying by heating can be used.

When the density of the formed body obtained after drying is not sufficiently high, thermal pressing may be applied after the drying step. It is to be noted that when the elastic behaviors of the first dielectric portion 1A and the second dielectric portions 2A are different, thermal pressing sometimes causes cracks in the formed body due to the stress generated between these two materials. Accordingly, when thermal pressing is applied, it is necessary to select the materials so that the first dielectric portion 1A and the second dielectric portions 2A may have the same elastic behavior. For example, when the powder slurry is prepared, the elastic behaviors of the first dielectric portion 1A and the second dielectric portions 2A can be matched by adding a predetermined amount of the binder resin used in fabricating the green sheets 11.

### <Cutting step>

In the cutting step, according to the use of the finally obtained photonic crystal 100A, the dielectric block 13 is cut to a predetermined shape.

The binder removal treatment conducted after the drying step is the same as detailed in the first process. By passing through the binder removal treatment, the first dielectric ceramic and the second dielectric ceramic in the formed body constitute the first dielectric portion 1A and the second dielectric portions 2A, respectively.

The formed body obtained after carrying out the drying and the binder removal treatment may be used as it is as the photonic crystal 100A; however, conversion of the formed body into a fired body makes it possible to obtain the photonic crystal 100A further improved in mechanical strength and dielectric constant. The firing step can be carried out under the same conditions as shown in the first process.

In the firing step, the first dielectric ceramic and the second dielectric ceramic in the formed body are co-fired. Accordingly, it is necessary to mutually match the firing behaviors of both materials, namely, the material (the first dielectric ceramic) constituting the first dielectric portion 1A and the material (the second dielectric ceramic) constituting the second dielectric portions 2A. If the firing behaviors of the two materials differ, a stress is generated between the first dielectric portion 1A and the second dielectric portions 2A, and hence sometimes cracks are generated in the fired body to be the photonic crystal 100A.

Co-firing is possible by means of a so-called printing method in which sheets applied with a dielectric paste thereon are laminated and the laminated body thus obtained is fired. However, according to this printing method, the dielectric paste is placed on the sheets, so that a photonic crystal having a pattern formed to be continuous along the lamination direction (the Z direction) cannot be obtained. On the contrary, the second process adopts a novel technique in which the powder slurry is filled in the dielectric block 13 having the openings continuous along the lamination direction, so that the photonic crystal 100A having a pattern formed to be continuous along the lamination direction can be obtained. In other words, according to the method for producing the photonic crystal 100A based on the second process, the degree of freedom with respect to the periodic structure is higher than that in the printing method.

In the case of the printing method, depending on the thickness of the dielectric paste layer, sheets having high surface irregularities are laminated. Consequently, owing to the irregularities formed on the sheets, there occur problems in that lamination is difficult (shape retention is difficult), cracks tend to occur in the fired body at the time of or after firing, and the sheets tend to delaminate from each other. In this connection, when trying to minimize the problems caused by the irregularities formed on the sheets, the thickness of the dielectric paste layer is limited, eventually leading to the decrease of the degree of freedom with respect to the periodic structure of the photonic crystal. On the contrary, in the second process, a predetermined pattern of openings are formed in the dielectric block 13 by laminating the green sheets 11 having the holes h formed beforehand, so that cracks are hardly generated at the time of or after firing, and there hardly occurs the problem that the sheets tend to delaminate from each other. Thus, according to the second process, there can be obtained the photonic crystal 100A high both in strength and in reliability.

The second process has been described above in detail. Because the second process is small in the number of steps and need no complicated steps, the photonic crystal 100A can be produced easily and in a short time according to the second process. Accordingly, the second process is also excellent in mass productivity.

Additionally, according to the second process which uses two dielectric ceramics, there can be obtained the photonic crystal 100A exhibiting a high strength and a broad band gap.

In the first and second process, the dielectric block 13 in which a predetermined pattern of openings are periodically arrayed is obtained by perforating, in the green sheets 11, namely, the sheet-like members, holes h penetrating along the thickness direction thereof in a predetermined pattern, and by laminating the hole-perforated green sheets 11. As compared to hole-perforating in a block-like member having a certain thickness, the hole-perforating in the thin green sheets 11 is easier, and can give a finer pattern of perforated holes (for example, being 2 mm or less in diameter, and furthermore of the order of 0.1 to 1.5 mm in diameter). By laminating the green sheets 11 having such a fine pattern of holes perforated therein, it is made possible to obtain the novel photonic crystal 100 having a fine pattern which has been hardly obtainable in a conventional manner.

FIGS. 2 and 4 respectively show the photonic crystals 100 and 100A each having a so-called honeycomb-structure pattern; however, by varying the pattern of perforated holes in the green sheets 11, there can be obtained the photonic crystals 100 and 100A each having another structural pattern.

In the above described sheet-punching step, there has been shown an example in which a plurality of holes h are formed in the green sheets 11 in a single step; however, for the purpose of responding to various types each small in demanded quantity, holes may be perforated one by one, by controlling the punching operation so as to meet the pattern of holes. When the size of the holes is varied, a plurality of punches differing in diameter are prepared and a punch to be used can be selected with the aid of a computer.

As mentioned above, by computer-controlling the sheet-punching, there can be produced the photonic crystals 100 and 100A responding to various types each small in demanded quantity, almost without requiring additional cost and time due to pattern alteration.

In the second process, an example is further presented in which the photonic crystal 100A is produced by use of the first dielectric ceramic and the second dielectric ceramic; however, a photonic crystal can be produced by further using a third dielectric. By producing a photonic crystal by further using a third dielectric, there can be produced a photonic crystal having a new periodic structure. The third dielectric may be either air or a third dielectric ceramic. When the third dielectric is a third dielectric ceramic, for example, a powder slurry containing the second dielectric ceramic is filled in a part of the openings in the dielectric block 13, and a powder slurry containing the third dielectric ceramic may be filled in the rest of the openings.

### <Third process>

As the third process, an example is presented in which a dielectric block is formed by means of a so-called printing technique and a photonic crystal 100 having a shape shown in FIG. 2 is thereby obtained.

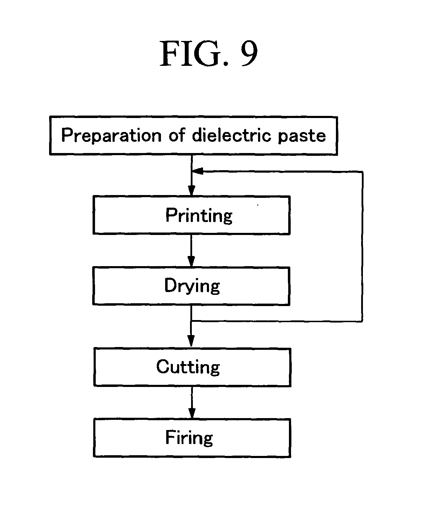

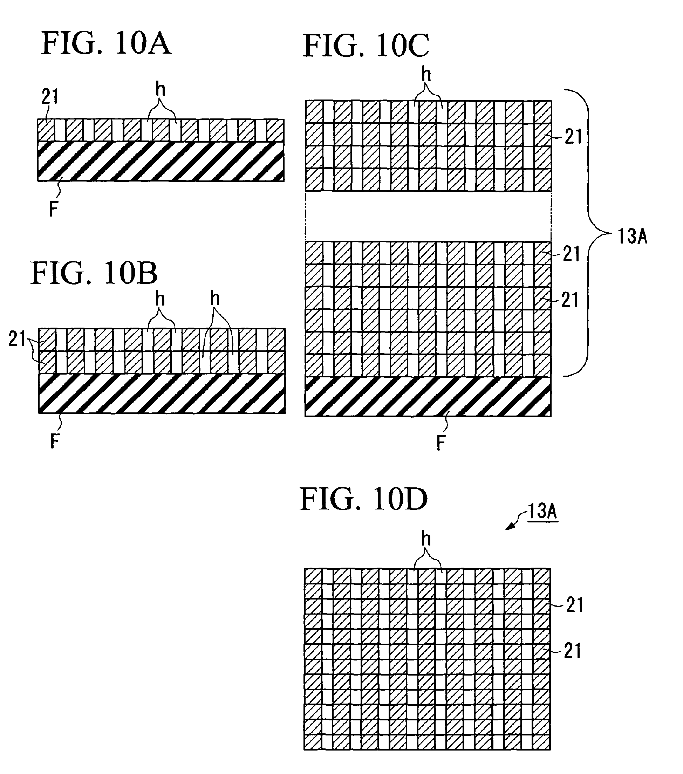

FIG. 9 is a flowchart showing the method for producing the photonic crystal 100 shown in FIG. 2. FIG. 10 is a diagram schematically illustrating the printing step shown in FIG. 9.

As shown in FIG. 9, the thirdprocess includes a dielectric paste-preparing step of preparing a dielectric paste by mixing a dielectric ceramic, a resin and the like, a printing step of printing in a predetermined pattern the dielectric paste obtained in the dielectric paste-preparing step, a drying step of forming a ceramic composition member by drying the dielectric paste, a cutting step of cutting to a predetermined shape a dielectric block obtained by repeating the printing and drying, and a firing step of firing a formed body cut to the predetermined shape.

Now, the respective steps shown in FIG. 9 will be described below in detail.

### <Dielectric paste-preparing step>

In the dielectric paste-preparing step, at the beginning, the dielectric paste is prepared by mixing a dielectric ceramic powder, a binder resin and a dispersion medium by means of a ball mill, a kneader or the like.

As the dielectric ceramic powder, the above described BaO-TiO₂-rare earth based ceramic powder and the like can be used. The amount of the dielectric ceramic powder may be set at about 20 to 60 wt% in relation to the dielectric paste. The mean particle size of the dielectric ceramic powder may be set at the order of 0.1 to 20 µm in the same manner as described above.

When thermocompression bonding is carried out in the below described laminating step, a thermoplastic and high-strength resin is used as the binder resin. As the binder resin, acryl based resins, butyral based resins, ethylcellulose based resins and the like can be used. The amount of the binder resinmaybe set at about 4 to 10 wt% in relation to the dielectric ceramic powder.

As the dispersion medium, various organic solvents such as butyl carbitol, butyl carbitol acetate and terpineol can be used. These are used as the dispersion medium because these can dissolve the above described binder resins and have relative low boiling points.

By appropriately selecting the type and amount of the dispersion medium, the viscosity of the dielectric paste can be regulated. For example, butyl carbitol has a low viscosity and terpineol has a high viscosity, and hence by mixing both with appropriate proportions to be used as the dispersion medium, the viscosity of the dielectric paste can be made suitable for the printing technique.

When the viscosity of the dielectric paste is too low, sagging of the paste occurs, so that a desired printing pattern can be hardly formed in the successive printing step. When the viscosity is too high, the release of the dielectric paste from the screen is worsened, so that the printing of the desired pattern is made difficult. Accordingly, it is necessary the viscosity of the dielectric paste be regulated carefully. The viscosity of the dielectric paste is regulated to fall within an appropriate range in consideration of the printing pattern, the printing technique used in the printing step and the like. When the screen printing technique is adopted as the printing technique, the viscosity of the dielectric paste may be set at the order of 500 to 50000 cp.

By further adding a dispersant according to need, the dielectric paste can be prepared. For example, olefin/maleic acid copolymer and oleic acid can be used as the dispersant. The addition amount of the dispersant may be set at the order of 0.1 to 5 wt% in relation to the dielectric ceramic powder. To the dielectric paste, a plasticizer may be further added. The addition amount of a plasticizer may be set at the order of 0.1 to 5 wt% in relation to the dielectric ceramic powder.

### <Printing step and drying step>

In the printing step, the dielectric paste is printed in a predetermined printing pattern by means of the screen printing technique or the like, and in the successive drying step, the dielectric paste is dried to form a ceramic composition member.

FIG. 10 is sectional views schematically illustrating the printing step.

As shown in FIG. 10A, at the beginning, the dielectric paste to constitute a first layer is printed on a film (for example, a PET film) F in a desired printing pattern. Here, the printing pattern is determined according to what periodic structure of the photonic crystal 100 it is desired to finally obtain. For example, when it is desired to finally obtain the photonic crystal 100 having a honeycomb structure shown in FIG. 2, the printing pattern shown in FIG. 7 is adopted. When the printing pattern shown in FIG. 7 is adopted, there are formed the ceramic composition members 21 in which the holes h penetrating along the thickness direction are formed regularly in a hexagonal lattice. After printing, the printed dielectric paste is subjected to drying by heating or natural drying.

Successively, as shown in FIG. 10B, on the ceramic composition member 21 constituting the first layer, the dielectric paste to constitute the second layer is printed in the same printing pattern as for the first layer, and is dried in the same manner as for the first layer. In the ceramic composite member 21 constituting the first layer, the holes h are formed in the desired two-dimensional periodic pattern. On the portion excluding the holes h, the dielectric paste to constitute the second layer is printed in a superposed manner. Thus, a new ceramic composition member 21 having the holes h penetrating along the thickness direction thereof, formed in a predetermined pattern is laminated on the ceramic composition member 21 constituting the first layer.

On the basis of the same procedure, the cycle of printing and drying is repeated until a laminated body having a desired thickness is obtained. Thus, as shown in FIG. 10C, there is obtained a laminated body formed of the ceramic composition members 21, namely, a dielectric block 13A having a predetermined pattern of openings formed therein. In principle, no pressing is necessary for the printing technique, but thermal pressing or the like may be applied to the dielectric block 13A. FIG. 10D shows the condition of the dielectric block 13A after having been subjected to thermal pressing.

The printing technique is not limited to the screen printing method; according to the thickness of the ceramic composition member 21, the printing techniques well known in the art such as gravure printing, letterpress printing and offset printing may be appropriately selected.

### <Cutting step>

After the printing step, the film F as the substrate is released from the dielectric block 13A, and then the successive cutting step is carried out. In the cutting step, according to the use of the finally obtained photonic crystal 100, the dielectric block 13A is cut to a predetermined shape (the dielectric block 13A having been cut to a predetermined shape is referred to as "a formed body," as the case may be).

### <Binder removal treatment>

The formed body obtained after the cutting step contains a large amount of resin components, and hence is beforehand subjected to the binder removal treatment in advance of the firing step. The binder removal treatment may be carried out under the same conditions as shown in the first process.

The formed body obtained on completion of the binder removal treatment may be used as it is as the photonic crystal 100. However, conversion of the formed body into a fired body makes it possible to obtain the photonic crystal 100 further improved in mechanical strength and dielectric constant. The firing step can also be carried out under the same conditions as shown in the first process.

The third process has been described above in detail. Based on the third process adopting the printing technique, there can be easily obtained the photonic crystal 100 having the fine holes h penetrating from the front surface to the back surface thereof.

There has been presented an example in which the photonic crystal 100 having a honeycomb periodic structure; however, by appropriately selecting the printing pattern according to the desired periodic structure, there can be easily obtained the photonic crystal 100 having a pattern of another two-dimensionalperiodicstructure. Therehasbeenpresented an example in which the ceramic composition members 21 fabricated by means of a printing technique are laminated by means of a printing technique; however, the ceramic composition members 21 fabricated by means of a printing technique may be laminated by means of such a procedure as the sheet-laminating step shown in the first process.

Moreover, the photonic crystal 100A shown in FIG. 4 can also be obtained by filling the powder slurry containing the second dielectric ceramic in the dielectric block 13A shown in FIG. 10, by means of the same procedure as shown in the second process.

### <Fourth process>

Next, the fourth process will be described below.

In the fourth process, the ceramic composites containing the first and second dielectric ceramics are fabricated, the ceramic composites are laminated to form a dielectric block (a laminated body), and the photonic crystal 100A is thereby produced. In the ceramic composite, the first dielectric ceramic and the second dielectric ceramic are periodically arrayed on one and the same plane.

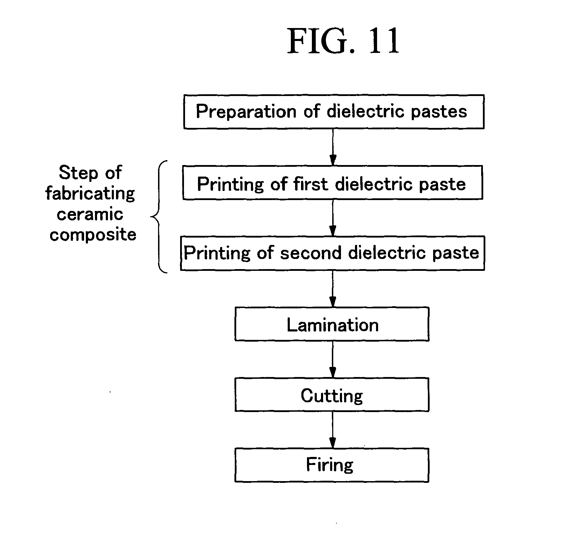

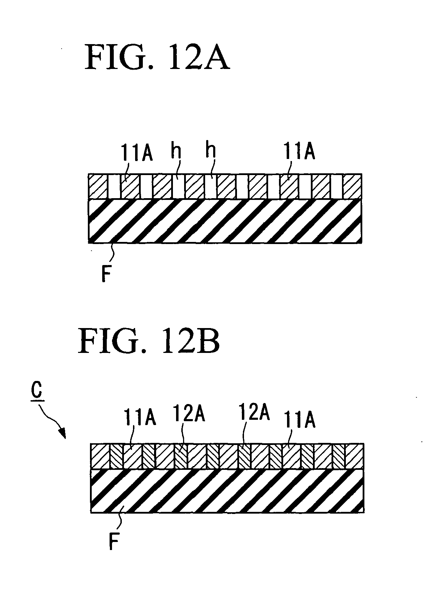

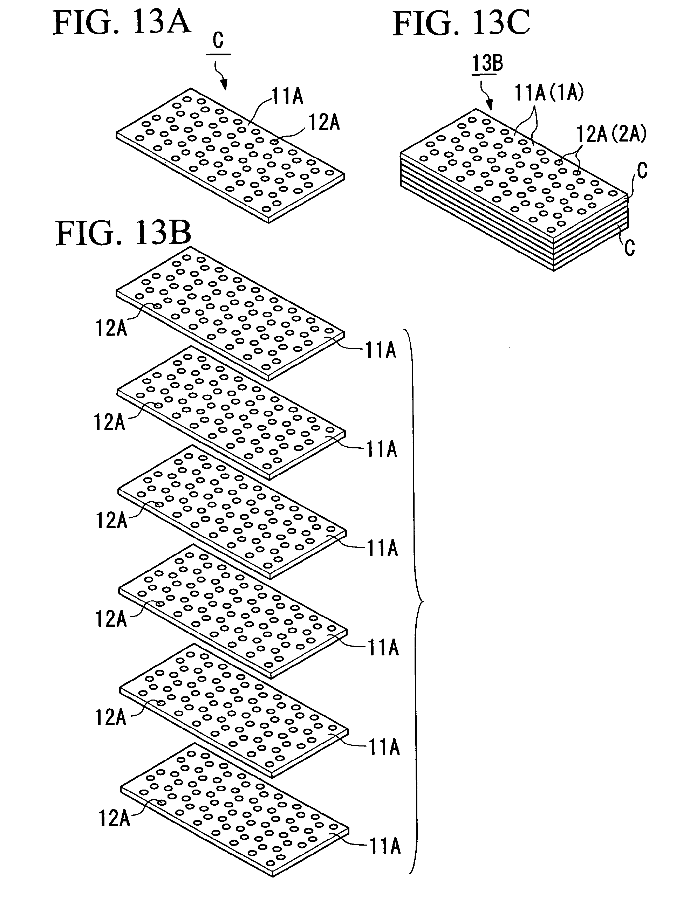

FIG. 11 is a flowchart showing the case for producing the photonic crystal 100A on the basis of the fourth process. FIG. 12 is sectional views schematically illustrating the ceramic composite-fabricating step shown in FIG. 11. FIG. 13 is a diagram schematically illustrating the laminating step shown in FIG. 11.

As is shown in FIG. 11, in the fourth process, the photonic crystal 100A is produced by passing through a dielectric paste-preparing step of preparing the first and second dielectric pastes by mixing each of the first and second dielectric ceramic powders with a binder resin, a dispersion medium and the like; a ceramic composite-fabricating step of fabricating ceramic composites containing the first and second dielectric ceramic powders by use of the first and second dielectric pastes; a laminating step of obtaining a dielectric block as a laminated body by laminating the ceramic composites; a cutting step of cutting the dielectric block to a predetermined shape; and a firing step of firing the formed body obtained by cutting.

Now, detailed description will be made below on the respective steps shown in FIG. 11.

### <Dielectric paste-preparing step>

In the dielectric paste-preparing step, the first dielectric paste (the first ceramic composition) which contains the first dielectric ceramic powder, and the second dielectric paste (the second ceramic composition) which contains the second dielectric ceramic powder are prepared separately. Each of the pastes may be prepared on the basis of the procedure described in the third process.

Here, it is to be noted that the first dielectric ceramic powder and the second dielectric ceramic powder will be collectively referred to as the "dielectric ceramic powder," unless discrimination between these two powders is necessary.

In the fourth process, for the purpose of carrying out thermocompression bonding in the laminating step to be described later, a thermoplastic and high-strength resin is used as the binder resin. As the binder resin and dispersion medium, those shown in the third process can be used.

In the fourth process, it is preferable to further add a plasticizer and a dispersant. The plasticizer is selected according to the type of the binder resin to be used. When the above described acryl based resins and the like are used as the binder resin, for example, a phthalic acid based plasticizer can be used. When a plasticizer is added, the addition amount thereof may be set at the order of 0.1 to 5 wt% in relation to the dielectric ceramic powder.

As for the dispersant, the dispersants shown in the third process can be used, and the addition amounts thereof may be set at the order of 0.1 to 5 wt% in relation to the first dielectric ceramic.

By appropriately selecting the types of the dispersion mediums and the amounts thereof, the viscosity of the dielectric paste can be regulated. For example, by mixing butyl carbitol having a low viscosity and terpineol having a high viscosity with appropriate proportions to be used as the dispersion medium, the viscosity of the dielectric paste can be regulated to be a viscosity appropriate for the printing technique. Also by appropriately selecting the types of the binder resins and the amounts thereof, the viscosity of the dielectric paste can be regulated.

When the viscosity of the dielectric paste is too low, print sagging occurs, making it difficult to form a desired printing pattern in the ceramic composite-fabricating step using a printing technique. When the viscosity is too high, a thin pattern cannot be printed, making thick the thickness of the obtained ceramic composite. If such thick ceramic composites are laminated, the number of steps along the thickness direction becomes small, eventually making the sectional shape along the thickness direction of the finally obtained photonic crystal tend to be irregular. Accordingly, it is necessary the viscosity of the dielectric paste be carefully regulated. The viscosity of the dielectric paste is regulated to fall within an appropriate range also in consideration of the printing pattern, the adopted printing technique and the like. When the screen printing technique is adopted as the printing technique, the viscosity of the dielectric paste may be set at the order of 2 Pa·s to 50 Pa·s.

### <Ceramic composite-fabricating step>

In the successive ceramic composite-fabricating step, the ceramic composites each containing the first and second dielectric ceramics are fabricated by respectively printing the first dielectric paste and the second dielectric paste. The printing is carried out in such a way that the first dielectric paste is arrayed on the site corresponding to the first dielectric portion 1A and the second dielectric paste is arrayed on the sites corresponding to the second dielectric portions 2A.

FIG. 12 is sectional views schematically illustrating the ceramic composite-fabricating step.

At the beginning, as shown in FIG. 12A, the first dielectric paste to constitute a first layer is printed on a film (for example, a PET film) F in a desired printing pattern. This printing can be carried out, for example, by using the screen printing technique. After printing, the printed first dielectric paste is subjected to drying by heating or natural drying.

Here, the printing pattern is determined according to what periodic structure of the photonic crystal 100A it is desired to finally obtain. For example, when it is desired to finally obtain the photonic crystal 100A having a honeycomb structure shown in FIG. 4, the printing pattern shown in FIG. 7 is adopted. When the printing pattern shown in FIG. 7 is adopted, a first ceramic composition 11A is obtained in which the holes h penetrating along the thickness direction thereof are formed regularly in a hexagonal lattice.

Successively, as shown in FIG. 12B, the second dielectric paste is printed in a pattern inverse to the printing pattern of the first layer. After printing, the printed second dielectric paste is subjected to drying by heating or natural drying.

The second dielectric paste is printed in the inverse pattern for the purpose of filling the second dielectric paste, namely, the second ceramic composition 12A in the holes h formed in the first ceramic composition 11A in such a way that the first ceramic composition 11A and the second ceramic composition 12A are arrayed on one and the same plane. For the purpose of making flat and smooth the surface of a ceramic composite C constituted with the first ceramic composition 11A and the second ceramic composition 12A, the application amount of the second dielectric paste is needed to be controlled on the basis of the thickness of the first ceramic composition 11A and the size of the holes h in the first ceramic composition 11A.

FIG. 13A shows the condition of the ceramic composite C from which the film F as the substrate has been released. The ceramic composites C are to be laminated in the laminating step to be described later; when the thickness of the ceramic composites C is too thin, the strength of the ceramic composites C is low, making the handling thereof difficult. Accordingly, in consideration of the easiness in handling in the laminating step, the thickness of the ceramic composites C is set to fall within a range from 1 to 800 µm, more preferably from 10 to 500 µm, and furthermore preferably from 20 to 200 µm.

### <Laminating step>

In the ceramic composite-fabricating step, a predetermined number of the ceramic composites C having a desired thickness are fabricated, and then the laminating step is carried out. In advance of the laminating step, the film F is beforehand released from the ceramic composites C.

In the laminating step, as shown in FIG. 13B, the ceramic composites C in which the first ceramic composition 11A and the second ceramic composition 12A are respectively arrayed on the predetermined sites are laminated and subjected to thermocompression bonding. The thermocompression bonding may be carried out every time when one of the ceramic composites C is laminated or after two or more ceramic composites C have been laminated. By laminating the ceramic composites C and thermocompression bonding thereof, a dielectric block 13B as shown in FIG. 13C is finally obtained. In other words, the thermocompression bonding is carried out for the purpose of integrating the ceramic composites C.

The heating temperature in the thermocompression bonding depends on the binder resin components used when the first dielectric paste and the second dielectric paste are prepared. For example, when the binder resin used in the preparation of the pastes is acrylic resin, the heating temperature may be set at 70 to 90°C. In the thermocompression bonding, it is critical to precisely bond the ceramic composites C so as not to cause displacement in lamination, and there is no need of applying a large pressure. The pressure may be appropriately set at the order of 20 to 80 kgf/cm² according to the thickness of the ceramic composites C.

The dielectric block 13B, as a laminated body formed of the ceramic composites C, has a predetermined periodic structure. In the example of FIG. 13C, a large number of the cylindrical second dielectric portions 2A are arrayed so as to penetrate from the front surface to the back surface of the dielectric block 13B, forming a honeycomb pattern of two-dimensional periodic structure. FIG. 13C shows an example in which the lamination number of the ceramic composites C is 6; however, no particular constraint is imposed on the lamination number, and the lamination number is appropriately determined according to the size and the like of the finally desired photonic crystal 100A.

For the purpose of increasing the density of the obtained dielectric block 13B, thermal pressing may be carried out in advance of the cutting step. The conditions for thermal pressing depend on the binder resin and the like used when fabricating the ceramic composites C; for example, the pressure may be set at the order of 500 to 2000 kgf/cm². When the binder resin used in preparing the dielectric paste is acrylic resin, the heating temperature may be set at 70 to 90°C.

When the elastic behaviors of the first ceramic composition 11A and the second ceramic composition 12A are different, thermal pressing sometimes causes cracks in the formed body due to the stress generated between these two materials. Accordingly, when thermal pressing is applied, it is necessary to select the materials so that the first ceramic composition 11A and the second ceramic composition 12A may have the same elastic behavior. For example, the elastic behaviors of the first ceramic composition 11A and the second ceramic composition 12A can be matched by preparing the second dielectric paste by use of the same resin as the binder resin in the first dielectric paste.

The cutting step and the binder removal treatment may be carried out under the same conditions as in the first process. The formed body obtained after carrying out the binder removal treatment may be used as it is as the photonic crystal 100A. The ceramic composites C are fabricated by arraying the first ceramic composition 11A on the site corresponding to the first dielectric portion 1A and the second ceramic composition 12A on the sites corresponding to the second dielectric portions 2A; and the dielectric block 13B is fabricated by laminating the ceramic composites C along the thickness direction thereof. Accordingly, the portion corresponding to the first ceramic composition 11A is the first dielectric portion 1A and the portions corresponding to the second ceramic composition 12A are the second dielectric portions 2A.

The firing step is not an indispensable step, but conversions of the formedbody into a fired boymakes it possible to obtain the photonic crystal 100A further improved in mechanical strength and dielectric constant. When the firing step is carried out, the firing conditions may be set to be the same as those in the first process.

The fourth process has been described above in detail. The fourth process does not need complicated steps, so that according to the fourth process, the photonic crystal 100A can be produced easily and in a short time. Accordingly, the method for producing the photonic crystal 100A in the fourth process is also excellent in mass productivity.

When the ceramic composites C are laminated, the adhesive strength may be increased by interposing adhesive layers therebetween. In this case, in the laminating step shown in FIG. 13, the ceramic composites C each having a thin printed adhesive layer either on the front or back surface thereof may be successively laminated.

In the above described laminating step, there has been shown an example in which the ceramic composites C are released from the film F to be successively laminated; however, the films F may be released after the ceramic composites C have been subjected to mutual thermocompression bonding. For example, on the ceramic composite C shown in FIG. 12B, another ceramic composite C having the film F adhered thereto is laminated so as for these ceramic composites C to face each other; and after thermocompression bonding, the films F may be released. In this case, by interposing an adhesive layer between the ceramic composites C, one of the ceramic composites C may be transcribed onto the other of the ceramic composites C.

### <Fifth process>

In the fourth process, there has been presented an example in which a plurality of ceramic composites C are beforehand fabricated, then the dielectric block 13B is formed by laminating the ceramic composites C, and thus the photonic crystal 100A having a shape shown in FIG. 4 is obtained. In the fifth process, the ceramic composite C is fabricated by arraying the first ceramic composition 11A and then the second ceramic composition 12A; and the ceramic composites C are laminated by repeating the operation in which after the first ceramic composition 11A has been laminated on this ceramic composite C, the second ceramic composition 12A is laminated. More specifically, as the fifth procedure, an example is presented in which by alternately printing the first dielectric paste which contains the first dielectric ceramic and the second dielectric paste which contains the second dielectric ceramic, the dielectric block 13B as a laminated body formed of the ceramic composites C is fabricated, and the photonic crystal 100A having a shape shown in FIG. 4 is thereby obtained.

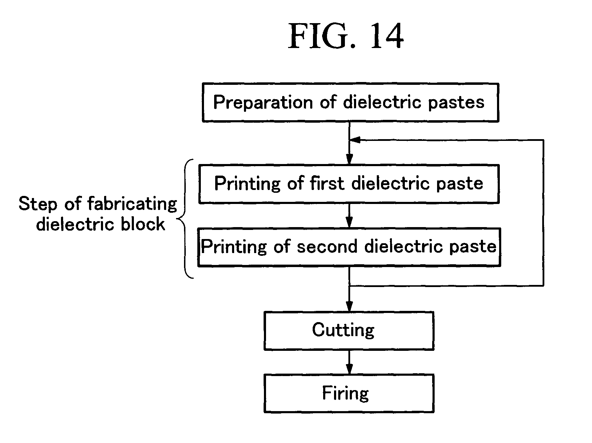

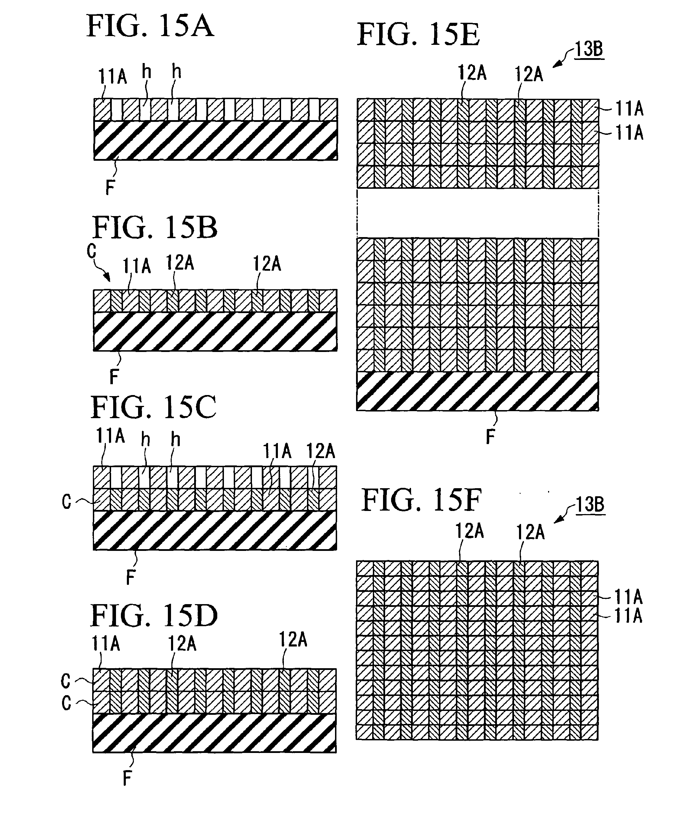

FIG. 14 is a flowchart showing the case for producing the photonic crystal 100A on the basis of the fifth process. FIG. 15 is a diagram schematically illustrating the step of fabricating dielectric block shown in FIG. 14.

As shown in FIG. 14, in the fifth process, the photonic crystal 100A is produced by passing through a dielectric paste-preparing step of preparing the first and second dielectric pastes by mixing each of the first and second dielectric ceramic powders with a binder resin, a dispersion medium and the like; a first printing step of printing in a predetermined pattern the first dielectric paste obtained in the dielectric paste-preparing step; a second printing step of printing in a pattern inverse to the printing pattern in the first printing step the second dielectric paste obtained in the dielectric paste-preparing step; a cutting step of cutting the dielectric block obtained by repeating the first printing step and the second printing step to a predetermined shape; and a firing step of firing the formed body cut to the predetermined shape.

Now, the respective steps shown in FIG. 14 will be described below in detail.

### <Dielectric paste-preparing step>

The first dielectric paste and the second dielectric paste are prepared on the basis of the procedure basically the same as those in the third and fourth processes except that any plasticizer need not be added and the below described resin is used as the binder resin.

In the fifth procedure, the dielectric block as the laminated body formed of the ceramic composites C is obtained by alternately printing the first and second dielectric pastes, so that the thermocompression bonding carried out in the fourth process is not needed. Accordingly, being thermoplastic is not an indispensable requirement for the selection standard of the binder resin; thus, resins having high in strength and permitting easily regulating the viscosity and easily carrying out the binder removal treatment are selected as the binder resin in the fifth process. As the binder resin, ethylcellulose based resins, butyral based resins and the like can be used. Also in the fifth process, the amount of the binder resin may be set at about 4 to 10 wt% in relation to the dielectric ceramic powder.

As the dispersion medium, various organic solvents such as terpineol and butyl carbitol can be used similarly to the third and fourth processes. By appropriately selecting the type and the amount of the dispersion medium, the viscosity of the dielectric paste can be regulated. When the viscosity of the dielectric paste is too low, print sagging occurs, making it difficult to form a desired printing pattern in the successive printing steps. When the viscosity of the dielectric paste is too high, leveling failure tends to occur. Accordingly, theviscosityof the dielectricpaste is regulated to fall within an appropriate range in consideration of the thickness and printing pattern of the desired ceramic composites C and the printing technique and the like used in the printing steps.

### <Step of fabricating dielectric block>

The step of fabricating dielectric block includes a first printing step of printing in a predetermined pattern the first dielectric paste obtained in the dielectric paste-preparing step; and a secondprinting step of printing in a pattern inverse to the printing pattern in the first printing step the second dielectric paste obtained in the dielectric paste-preparing step.

FIG. 15 is sectional views schematically illustrating the step of fabricating dielectric block.

### (First printing step)

As shown in FIG. 15A, the first dielectric paste to constitute the first layer is printed on the film (for example, a PET film) F in a desired printing pattern. In this case, the printing pattern is determined depending on what periodic structure of the photonic crystal 100A is desired to finally obtain. By subjecting the printed first dielectric paste to drying by heating or natural drying, the first ceramic composition 11A is obtained in which the holes h penetrating along the thickness direction thereof are formed regularly.

### (Second printing step)

Successively, as shown in FIG. 15B, the second dielectric paste is printed in a printing pattern inverse to the printing pattern in the first printing step. After printing, the printed second dielectric paste is subjected to drying by heating or natural drying, to yield the second ceramic composition 12A. For the purpose of equalizing the thickness of the second ceramic composition 12A to the thickness of the first ceramic composition 11A, in the second printing step, the application amount of the second dielectric paste is controlled on the basis of the thickness of the first ceramic composition 11A and the size of the holes h in the first ceramic composition 11A.

By passing through the first printing step and the second printing step, the ceramic composite C as shown in FIG. 15B is formed on the film F.

Successively, as shown in FIG. 15C, the first dielectric paste to constitute the second layer is printed on the ceramic composite C, and subjected to drying. By drying the first dielectric paste, the first ceramic composition 11A having the holes h penetrating along the thickness direction thereof, formed therein regularly is newly arrayed on the ceramic composite C. Next, as shown in FIG. 15D, the second dielectric paste is printed in the printing pattern inverse to the printing pattern in the first printing step. After printing, the printed second dielectric paste is subjected to drying by heating or natural drying, yielding the second ceramic composition 12A.

On the basis of the same procedures, printing and drying are repeated until a laminated body having a desired thickness is obtained. Thus, there is obtained a dielectric block 13B, namely, a laminated body formed of the ceramic composites C as shown in FIG. 15E. In the ceramic composites C in the laminated body, the first ceramic composition 11A is arrayed on the site corresponding to the first dielectric portion 1A and the second ceramic composition 12A is arrayed on the sites corresponding to the second dielectric portions 2A. In principle, no pressing is necessary for the fifth process, but thermal pressing or the likemaybe applied to the dielectric block 13B. FIG. 15F shows the condition of the dielectric block 13B after having been subjected to thermal pressing.

According to the thickness of the ceramic composition 11A, the printing techniques well known in the art such as screen printing, gravure printing, letterpress printing and offset printing may be appropriately selected.

### <Cutting step, binder removal treatment, and firing step>

After the printing step, the film F as the substrate is released from the dielectric block 13B, and then the successive cutting step is carried out. The cutting step, binder removal treatment and firing step may be carried out under the same conditions as shown in the first process. Similarly to the first to fourth processes, the formed body which is obtained after carrying out the binder removal treatment may be used as it is as the photonic crystal 100A.

The fifth process has been described above in detail. Because the fifth process is small in the number of steps and need no complicated steps, so that according to the fifth process, the photonic crystal 100A can be produced easily and in a short time. Accordingly, the fifth process is also excellent in mass productivity.

There has been presented an example in which the ceramic composites C fabricated by means of a printing technique are laminated by means of a printing technique; however, the ceramic composites C fabricated by means of a printing technique may be laminated by means of such a procedure as the laminating step shown in the fourth process.

According to the fourth process and the fifth process, the second dielectric portions 2A can be formed in a cylindrical shape of 2 mm or less in diameter. For this purpose, the photonic crystal 100A may be produced by laminating the ceramic composites obtained by printing the first dielectric paste containing the first dielectric ceramic in a pattern having a plurality of holes of 2 mm or less in diameter, and by printing the second dielectric paste containing the second dielectric ceramic in a pattern inverse to the above described pattern. The cylindrical second dielectric portions 2A are arrayed with predetermined intervals so as to penetrate from the front surface to the back surface of the block-like first dielectric portion 1A.

According to the properties demanded for the photonic crystal 100A, the array, size, shape and the like of the second dielectric portions 2A can be appropriately set. Thus, the second dielectric portions 2A may have a diameter more than 2 mm, and needless to say, may be rectangular parallelepiped but not cylindrical in shape.

In the fourth process or the fifth process, in particular, in the step of printing the second dielectric paste, the second dielectric paste containing the second dielectric ceramic powder is printed in a part of a plurality of holes h formed in the first ceramic composition 11A, and a third dielectric paste containing a third dielectric ceramic powder can also be printed in the rest of the holes h. In this way, by producing a photonic crystal by further using a third dielectric, a photonic crystal having a new periodic structure can be obtained.

Additionally, the second dielectric paste containing the second dielectric ceramic powder is printed in a part of the plurality of the holes h formed in the first ceramic composition 11A, and air may be placed as the third dielectric in the rest of the holes h.

Additionally, in the fourth and fifth processes, examples are presented in each of which the photonic crystal 100A having a two-dimensional periodic structure is obtained by laminating the sheet-like ceramic composites C fabricated on the basis of one and the same printing pattern; however, needless to say, the printing pattern can be appropriately varied from sheet to sheet. For example, when a photonic crystal having a three-dimensional periodic structure is produced, a plurality of sheets differing in printing pattern may be laminated. In this case, by making the thickness of the sheets as thin as possible, the pattern of the three-dimensional periodic structure can vary smoothly along the thickness direction thereof. According to the method for producing a photonic crystal of the present invention, by appropriately selecting the shape of the printing pattern, a photonic crystal 100A having a desired periodic structure, so that the degree of freedom of the periodic structure is high.

### <Sixth process>

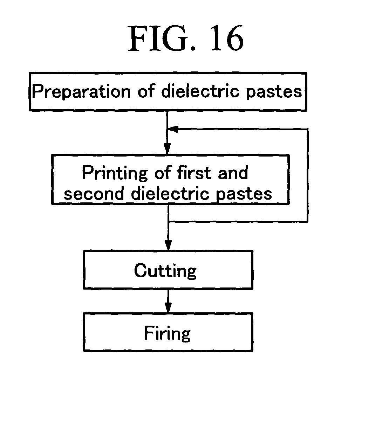

In the above described fourth and fifth processes, examples are presented in each of which arraying of the first ceramic composition 11A and arraying of the second ceramic composition 12A are carried out separately in time; however, arraying of the first ceramic composition 11A and arraying of the second ceramic composition 12A may be carried out substantially simultaneously. For example, on the basis of the flowchart shown in FIG. 16, the fabrication and lamination of the ceramic composites C can be carried out by repeating the step in which the first dielectric paste and the second dielectric paste are printed simultaneously. It is to be noted that the steps other than the printing step shown in FIG. 16 may be made in the same manner as in the fifth process.

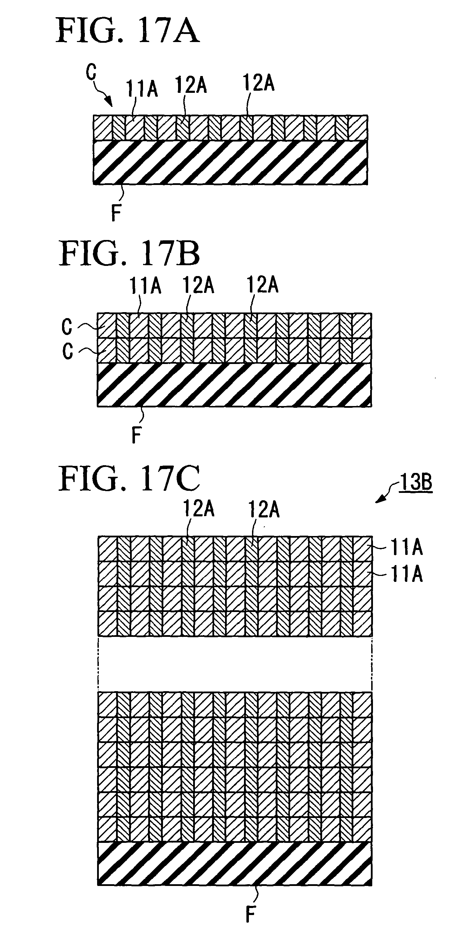

Specifically, as shown in FIG. 17A, the first dielectric paste and the second dielectric paste to constitute a first layer are printed on a film (for example, a PET film) F in a desired printing pattern, namely, arrayed substantially simultaneously. After the printed first and second dielectric pastes have been dried, as shown in FIG. 17B, the first dielectric paste and the second dielectric paste are simultaneously printed in a desired printing pattern on the first layer of the ceramic composite C. By drying the printed first and second dielectric pastes, a second layer of the ceramic composite C is obtained.

On the basis of the same procedure, the step is repeated in which the first dielectric paste and the second dielectric paste to constitute the (n+1)-th layer are printed on the n-th dielectric layer and then dried, until a laminated body having a desired thickness is obtained. In this way, as shown in FIG. 17C, the dielectric block 13B, namely, a laminated body formed of the ceramic composite C may be obtained. In this type, the fabrication and lamination of the ceramic composite C can be said to proceed almost simultaneously.

When the first and second dielectric pastes are printed on a predetermined area, a predetermined time elapses from the start to the end of the printing, so that arraying of the first ceramic composition 11A and arraying of the second ceramic composition 12A cannot be made strictly simultaneously at the start and end of the printing. Accordingly, as the concept including such a type, here is used an expression of "substantially simultaneously."

It is to be noted that the ceramic composite C obtained substantially simultaneously may be laminated on the basis of the same procedure as in the fourth process.

### <Seventh process>

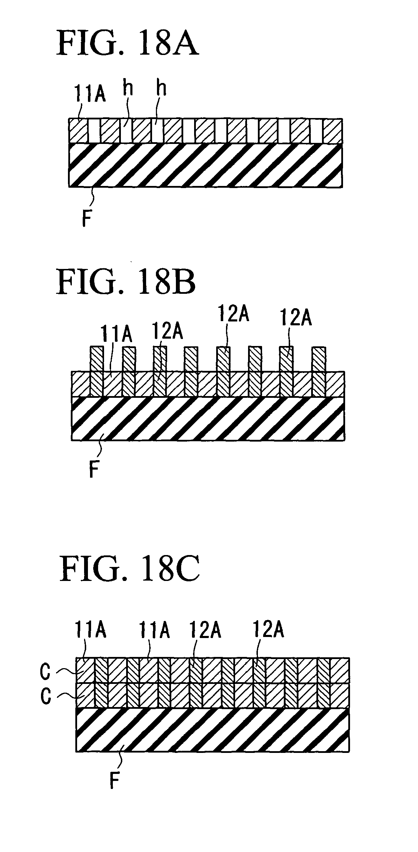

For example, a first ceramic composition 11A is obtained which has holes h formed in a predetermined pattern as shown in FIG. 18A. Then, the second ceramic composition 12A is filled in the holes h to obtain the ceramic composite C, and then the second ceramic composition 12A is printed, namely, arrayed as shown in FIG. 18B. Then, as shown in FIG. 18C, the first ceramic composition 11A may be printed, namely, arrayed so as to cover the circumference of the second ceramic composition 12A. Alternatively, after the first ceramic composition 11A shown in FIG. 18A has been obtained, the second ceramic composition 12A is filled in the holes h in the first ceramic composition 11A in such a way that the thickness of the second ceramic composition 12A is thicker than the thickness of the first ceramic composition 11A, and as shown in FIG. 18C, the first ceramic composition 11A may further be arrayed so as to cover the circumference of the second ceramic composition 12A.

### (Examples)

Now, the present invention will be described below in more detail with reference to specific examples.

### [Example 1]

On the basis of the flowchart shown in FIG. 8, hole-perforated sheets were laminated, and then a photonic crystal 100A was produced by filling the dielectric sheets.

As a first dielectric ceramic, a BaO-SiO₂-Al₂O₃-B₂O₃ based powder (dielectric constant: 6.4) having a mean particle size of 0.7 µm was prepared. As a second dielectric ceramic, a BaO-Nd₂O₃-TiO₂-B₂O₃-ZnO₂-CuO based powder (dielectric constant: 75.4) having a mean particle size of 1.0 µm was prepared.

At the beginning, the first dielectric ceramic, a dispersant, a resin and a dispersion medium were mixed together by use of a ball mill, to yield a slurry. Then, by use of a doctor-blade method, the slurry was converted into a sheet to prepare a 82 mm x 82 mm x 120 µm green sheet. The proportions of the first dielectric ceramic, the resin and the dispersion medium were set at 23:11:66 by vol%. The types of the dispersant, resin and dispersion medium and the addition amount of the dispersant were as follows:
Dispersant: Olefin/maleic acid copolymer (brand name: Flowlen G-700, manufactured by Kyoeisha Chemical Co., Ltd.)
Addition amount of the dispersion medium: 1.5 wt% in relation to the first dielectric ceramic
Resin: Acrylic resin
Dispersion medium: Toluene

The second dielectric ceramic, a dispersant and a dispersion medium were mixed to prepare a powder slurry. In this case, the proportions of the second dielectric ceramic and dispersion medium were set at 50:50 by vol%. The types of the dispersant and dispersion medium and the addition amount of the dispersant were as follows. The mixing was carried out for 2 hours by use of a kneader. No resin was added when the powder slurry was prepared, in order to prevent the excessive increase of the viscosity of the powder slurry caused by addition of a resin.
Dispersant: Olefin/maleic acid copolymer (brand name: Flowlen G-700, manufactured by Kyoeisha Chemical Co., Ltd.)
Addition amount of the dispersant: 1 wt% in relation to the second dielectric ceramic
Dispersionmedium: Amixed solution of 50 vol% of terpineol and 50 vol% of butyl carbitol

Next, by use of a punch having a pattern formed therein as shown in FIG. 7, a honeycomb structure of holes were formed on the green sheets. The diameter of the holes was set at 1 mm.

By laminating the 60 green sheets each having the honeycomb structure of holes formed therein, a dielectric block having a predetermined pattern of openings formed therein was obtained. Thermocompression bonding was carried out every time when one of the green sheets was laminated. The conditions for the thermocompression bonding were as follows:
Pressure: 45 kgf/cm²
Heating temperature: 85°C
Retention time: 1 sec

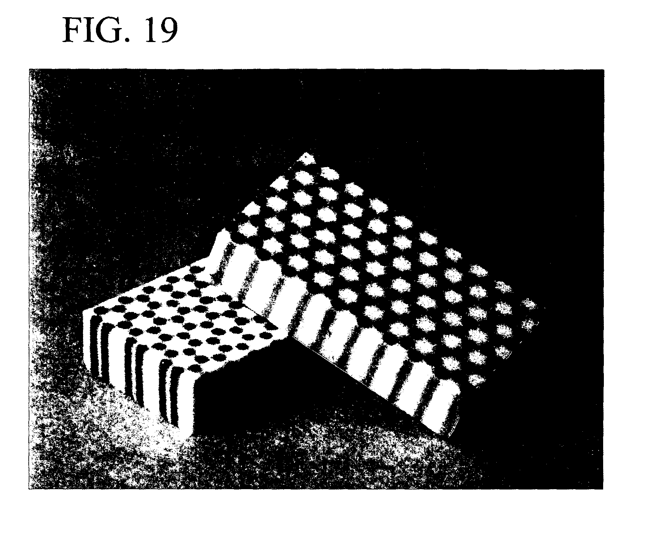

The thus obtained dielectric block was placed on a suction plate. A sufficient amount of the powder slurry containing the second dielectric ceramic was placed on the upper side of the dielectric block, sucked from the under side of the suction plate by using a pump, and thus the powder slurry was filled in the openings of the dielectric block. The dielectric block filled with the powder slurry was subjected to natural drying, then subjected to a binder removal treatment under the following conditions, and then fired to yield Sample 1. A photo of the obtained Sample 1 is shown in FIG. 19. The size of Sample 1 was 10.6 mm × 4.3 mm × 18 mm.

As shown in FIG. 19, the openings of the dielectric block were densely filled with the second dielectric ceramic, so that the openings and cracks were not observed.

### <Binder removal treatment conditions>

Atmosphere: Air
Temperature raising rate: 60°C/h
Retention temperature: 500°C
Retention time: 0

### <Firing conditions>

Atmosphere: Air
Temperature raising rate: 600°C/h
Retention temperature: 910°C
Retention time: 1 h

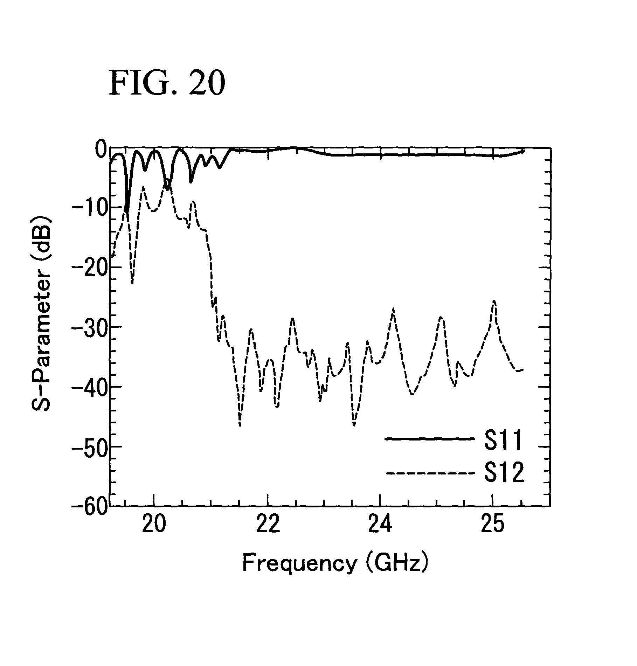

The obtained sample was placed in a waveguide, and the reflection and transmission properties thereof were measured by means of a Network Analyzer (HP-8510C, manufactured by Agilent Technologies, Ltd.). The results obtained are shown in FIG. 20. The number of the periods along the propagation direction was 4.5 in the sample subjected to the measurement of the transmission properties.

As shown in FIG. 20, an attenuation of 30 dB or more was observed in a range from 21.0 to 26.5 GHz belonging to the K band, so that the generation of a band gap was manifested.

### [Example 2]

A photonic crystal 100A was produced on the basis of the flowchart shown in FIG. 11.

A first dielectric ceramic powder, a dispersion medium, a binder resin and a dispersant were mixed by use of a ball mill to prepare a first dielectric paste. In this case, the proportions of the first dielectric ceramic powder and the dispersion medium were set at 45:55 (wt%). The binder resin was added in an amount of 5 wt% in relation to the first dielectric ceramic powder, and the dispersant was added in an amount of 1 wt% in relation to the first dielectric ceramic powder. The types of the dispersant, binder resin and dispersion medium were as follows: The types of the first and second dielectric ceramic powders used in Example 2 are the same as those used in Example 1.
Dispersant: Olefin/maleic acid copolymer (brand name: Flowlen G-700, manufactured by Kyoeisha Chemical Co., Ltd.)
Binder resin: Ethylcellulose
Dispersionmedium: A mixed solution of 50 vol% of terpineol and 50 vol% of butyl carbitol

Next, a second dielectric ceramic powder, a dispersion medium, a binder resin and a dispersant were mixed together by use of a ball mill to prepare a second dielectric paste. The proportions of the second dielectric ceramic powder and dispersion medium were set at 45:55 (wt%), to be the same as in the first dielectric paste. The binder resin was added in an amount of 5 wt% in relation to the second dielectric ceramic powder, and the dispersant was added in an amount of 1 wt% in relation to the second dielectric ceramic powder. The types of the dispersant, binder resin and dispersion medium were the same as those in the first dielectric paste. The viscosities of the first dielectric paste and the second dielectric paste were both 15 Pa·s.

Then, by use of the screen printing technique, the first dielectric paste was printed on a PET film. The printing of the first dielectric paste was carried on the basis of a pattern shown in FIG. 7, to yield a first ceramic composition having through-holes arrayed in a predetermined pattern. The printing was controlled so as for the diameter of the though-holes to be 1 mm.

The through-holes in the first ceramic composition were filled with the second dielectric paste by means of the screen printing technique. A ceramic composite having a flat and smooth surface was finally obtained by controlling the filling amount of the second dielectric paste in consideration of the thickness and the through-hole size of the first ceramic composition.

The 120 ceramic composites thus obtained were laminated to yield a dielectric block in which the cylindrical second dielectric ceramics were arrayed in a honeycomb pattern. Thermocompression bonding was carried out every time when one of the ceramic composites was laminated. The conditions of the thermocompression bonding were the same as those in Example 1.

Successively, the dielectric block was subjected to a binder removal treatment, and then to firing to yield Sample 2. The size of Sample 2 was 10.6 mm × 4.3 mm × 18 mm. The conditions of the binder removal treatment and firing were the same as those in Example 1.

Also for Sample 2, similarly to Sample 1, no openings and no cracks were observed in the cylinders constituted with the second dielectric and in the interface between these cylinders and the first dielectric covering these cylinders.

Sample 2 was placed in a waveguide, and the reflection and transmission properties thereof were measured by means of a Network Analyzer (HP-8510C, manufactured by Agilent Technologies, Ltd.). Consequently, an attenuation of 25 dB or more was observed in a range from 20 to 24 GHz belonging to the K band, so that the generation of a band gap was manifested.

### [Example 3]

A photonic crystal 100A was produced on the basis of the flowchart shown in FIG. 14.

A first dielectric paste and a second dielectric paste were prepared on the basis of the same procedures as in Example 2. However, in the first dielectric paste, the proportions of the first dielectric ceramic powder and the dispersion medium were set at 50 : 50 (wt%). Also in the second dielectric paste, the proportions of the second dielectric ceramic powder and the dispersion medium were set at 50:50 (wt%). The viscosities of the first dielectric paste and the second dielectric paste were both 20 Pa.s. The addition amounts of the binder resin and the dispersant in each of the first dielectric paste and the second dielectric paste were the same as those in Example 2.

Then, by use of the screen printing technique, the first dielectric paste was printed on a PET film. The printing of the first dielectric paste was carried on the basis of a pattern shown in FIG. 7, to yield a first ceramic composition having through-holes arrayed in a predetermined pattern. The printing was controlled so as for the diameter of the though-holes to be 1 mm.

The through-holes in the first ceramic composition were filled with the second dielectric paste by means of the screen printing technique. A ceramic composite having a flat and smooth surface was finally obtained by controlling the filling amount of the second dielectric paste in consideration of the thickness and the through-hole size of the first ceramic composition.

Then, on the ceramic composite, after the first dielectric paste has been printed and dried to obtain a first ceramic composition, the second dielectric paste was printed in a pattern inverse to the printing pattern of the first dielectric paste. In this way, the steps for printing and drying of the first dielectric paste and the steps for printing and drying of the second dielectric paste were repeated 60 times to yield a dielectric block in which the cylindrical second dielectric ceramics were arrayed in a honeycomb pattern.

Successively, the dielectric block was subjected to a binder removal treatment, and then to firing to yield Sample 3. The size of Sample 3 was 10.6 mm × 4.3 mm × 18 mm. The conditions of the binder removal treatment and firing were the same as those in Example 1.

Sample 3 was placed in a waveguide, and the reflection and transmission properties thereof were measured under the same conditions as in Example 1. Consequently, an attenuation of 20 dB or more was observed in a range from 20 to 24 GHz belonging to the K band, so that the generation of a band gap was manifested.

### [Example 4]

A photonic crystal 100 was produced on the basis of the flowchart shown in FIG. 5.

As a dielectric ceramic powder, a BaO-Nd₂O₃-TiO₂-B₂O₃ based powder (dielectric constant: 95) having a mean particle size of 1.0 µm was prepared, and a dielectric block was obtained under the same conditions as in Example 1. The obtained dielectric block was subj ected to the binder removal treatment and firing under the same conditions as in Example 1 to yield Sample 4. The size of Sample 4 was 10.6 mm × 4.3 mm × 18 mm.

Sample 4 was placed in a waveguide and the reflection and transmission properties thereof were measured (the S-parameters were measured) by means of a Network Analyzer (HP-8510C, manufactured by Agilent Technologies, Ltd.). Consequently, an attenuation of 30 dB or more was observed for the TE wave in a range from 22 to 25 GHz belonging to the K band.

### [Example 5]

A photonic crystal 100 was produced on the basis of the flowchart shown in FIG. 9.

As a dielectric ceramic powder, a BaO-Nd₂O₃-TiO₂-B₂O₃ based powder (relative dielectric constant: 95) having a mean particle size of 1.0 µm was prepared.

At the beginning, the dielectric ceramic powder, a binder resin, a dispersion medium and a dispersant were mixed together by use of a kneader to prepare a dielectric paste. In this case, the binder resin, dispersion medium and dispersant were added in amounts of 3 wt%, 30 wt% and 1 wt% in relation to the dielectric ceramic powder, respectively, to yield the dielectric paste having a viscosity of 20000 cp. The types of the dispersant, binder resin and dispersion medium were as follows.

Then, by means of the screen printing technique, the dielectric paste was printed on a PET film as a substrate, and dried to yield a ceramic composition member to constitute a first layer. A dielectric block was obtained by repeating a step in which on the obtained ceramic composition, the dielectric paste was printed in a superposed manner and dried. The printing pattern was the honeycomb structure shown in FIG. 7, and the diameter of the holes was 1 mm.
Dispersant: Olefin/maleic acid copolymer (brand name: Flowlen G-700, manufactured by Kyoeisha Chemical Co., Ltd.)
Binder resin: Ethylcellulose
Dispersion medium: A mixed solution of butyl carbitol and terpineol (50 vol%:50 vol%)

The 100 µm thick ceramic composition having a honeycomb structure of holes formed therein was laminated 50 times by means of the screen printing technique, namely, printed in a superposed manner, to yield a dielectric block having a predetermined pattern of openings formed therein.

The dielectric block was subjected to the binder removal treatment under the same conditions as in Example 1, and then to the firing under the same conditions as in Example 1 to yield Sample 5. The size of Sample 5 was 10.6 mm × 4.3 mm × 18.0 mm.

Sample 5 was placed in a waveguide, and the reflection and transmission properties thereof were measured (the S-parameters were measured) by means of a Network Analyzer (HP-8510C, manufactured by Agilent Technologies, Ltd.).

Consequently, an attenuation of 25 dB or more was observed for the TE wave in a range from 22 to 25 GHz belonging to the K band.

### Industrial Applicability

According to the present invention, a method excellent in mass productivity for producing a photonic crystal can be provided. Additionally, according to the present invention, a compact, high-strength and high-performance photonic crystal can be easily produced. Furthermore, according to the present invention, a photonic crystal having a fine pattern can be obtained.

## Claims

1. A method for producing a photonic crystal in which a first dielectric and a second dielectric different in relative dielectric constant from said first dielectric are periodically arrayed, **characterized by** comprising the steps of:
fabricating a first composite dielectric in which said first dielectric and said second dielectric are periodically arrayed in one and the same plane; and
laminating on said first composite dielectric a second composite dielectric in which said first dielectric and said second dielectric are periodically arrayed in one and the same plane.

2. The method for producing a photonic crystal according to claim 1, **characterized in that** said first dielectric is a dielectric ceramic and said second dielectric is air.

3. The method for producing a photonic crystal according to claim 2, **characterized in that** a dielectric block having a predetermined pattern of openings periodically arrayed is obtained by laminating said first composite dielectric and said second composite dielectric, wherein each of said composite dielectrics has holes which penetrate along the thickness direction thereof and are formed in a predetermined pattern.

4. The method for producing a photonic crystal according to claim 3, **characterized in that** said predetermined pattern of openings penetrate through said dielectric block from the front surface to the back surface thereof, and air as said second dielectric is placed in the openings.

5. The method for producing a photonic crystal according to claim 1, **characterized in that** said first composite dielectric and said second composite dielectric are each obtained by perforating holes in a sheet-like member.

6. The method for producing a photonic crystal according to claim 1, **characterized in that** said first composite dielectric and said second composite dielectric are obtained by use of a printing technique.

7. The method for producing a photonic crystal according to claim 6, **characterized in that** lamination of said first composite dielectric and said second composite dielectric is carried out by use of said printing technique.

8. The method for producing a photonic crystal according to claim 1, **characterized in that** said first dielectric and said second dielectric each are a dielectric ceramic.

9. The method for producing a photonic crystal according to claim 8, **characterized by** further comprising the steps of:
laminating said first composite dielectric and said second composite dielectric to obtain a dielectric block having a predetermined pattern of openings periodically arrayed wherein each of said composite dielectrics is sheet-like and has holes which penetrate along the thickness direction thereof and are formed in a predetermined pattern; and
arraying said second dielectric in said openings.

10. The method for producing a photonic crystal according to claim 9, **characterized in that** a powder slurry comprising said second dielectric is filled in the openings of said dielectric block.

11. The method for producing a photonic crystal according to claim 10, **characterized in that** filling of said powder slurry is carried out by suction or pressurization.

12. The method for producing a photonic crystal according to claim 9, **characterized in that** said predetermined pattern of openings penetrate through said dielectric block from the front surface to the back surface thereof.

13. The method for producing a photonic crystal according to claim 10, **characterized in that** a powder slurry comprising said second dielectric is filled in said openings of said dielectric block, and thereafter said first dielectric and said second dielectric are co-fired.

14. The method for producing a photonic crystal according to claim 9, **characterized in that** said first composite dielectric and said second composite dielectric each have a thickness from 1 to 800 µm.

15. The method for producing a photonic crystal according to claim 8, **characterized in that** said first composite dielectric and said second composite dielectric each are a ceramic composite, and said ceramic composite is fabricated by:
arraying a first ceramic composition constituting said first dielectric on the sites corresponding to said first dielectric; and
arraying a second ceramic composition constituting said second dielectric on the sites corresponding to said second dielectric.

16. The method for producing a photonic crystal according to claim 15, **characterized in that** a plurality of said ceramic composites are laminated, wherein said plurality of said ceramic composites are obtained by arraying said first ceramic composition and thereafter arraying said second ceramic composition.

17. The method for producing a photonic crystal according to claim 15, **characterized in that**:
said ceramic composite is fabricated by arraying said first ceramic composition and thereafter arraying said second ceramic composition; and
said ceramic composite is laminated by repeating the step of arraying any one of said first ceramic composition and said second ceramic composition on said ceramic composite, and thereafter arraying the other of said first ceramic composition and said second ceramic composition thereon.

18. The method for producing a photonic crystal according to claim 16 or 17, **characterized by** further comprising a step of firing the laminated body formed of said ceramic composite.

19. The method for producing a photonic crystal according to claim 1, **characterized in that** said photonic crystal has a two-dimensional periodic structure.

20. A photonic crystal in which a first block-like dielectric and a cylindrical second dielectric different in relative dielectric constant from said first dielectric are arrayed in a predetermined period, the photonic crystal being **characterized in that**:
said first dielectric and said second dielectric each are formed of a dielectric ceramic; and
said second dielectric is constituted with a plurality of cylindrical members of 2 mm or less in diameter, and said second dielectric is arrayed with a predetermined interval so as to penetrate through said first dielectric from the front surface to the back surface thereof.

21. A photonic crystal comprising a first dielectric and a second dielectric different in relative dielectric constant from said first dielectric, said first dielectric and said second dielectric being arrayed with a predetermined period, **characterized in that**:
said first dielectric is constituted with a dielectric block comprising a dielectric ceramic with openings of 2 mm or less in diameter, the openings being formed in a predetermined pattern; and
said second dielectric is constituted with the air present in said openings.

22. The photonic crystal according to claim 20 or 21, **characterized in that** said photonic crystal has a two-dimensional periodic structure.
